# EUROPEAN PATENT APPLICATION

(11) **EP 4 645 639 A1**
(43) Date of publication of application: **05.11.2025**
(21) Application number: 25167386.9
(22) Date of filing: 31.03.2025
(51) Int. Cl.: H02J 7/00, A45C 11/04, A45C 15/00, H02J 50/10, G02B 27/01

(54) **PORTABLE SMART GLASSES CHARGING CASE CONFIGURED TO CHARGE ONE OR MORE ADDITIONAL PERIPHERAL DEVICES, AND SYSTEMS THEREOF**

(30) Priority: 25.04.2024 US 202463638818 P; 07.03.2025 US 202519074308
(71) Applicant: Meta Platforms Technologies, LLC, Menlo Park, CA 94025 (US)
(72) Inventor: ALANEN, Lindsay, Menlo Park (US); SPENCER, Stuart, Menlo Park (US)
(74) Representative: Murgitroyd & Company

(57) **Abstract**

A portable smart glasses charging case comprises a glasses-holding section configured to hold a pair of smart glasses and deliver a charge. The portable smart glasses charging case also comprises a foldable section having: a folded state in which the foldable section is configured to cover the glasses-holding section while the pair of smart glasses continues to receive the charge; and an unfolded state in which the foldable section lays substantially flat to reveal a first section for delivering a charge to a first electronic device that is distinct from the pair of smart glasses and a second section for delivering a charge to a second electronic device that is distinct from the pair of smart glasses and the first electronic device, and the pair of smart glasses continues to receive the charge while the first and second sections are delivering respective charges to the first and second electronic devices.

## Description

### RELATED APPLICATIONS

This application claims priority to U.S. Provisional Application Serial No. 63/756,754 filed February 10, 2025 and U.S. Provisional Application Serial No. 63/638,818 filed April 25, 2024.

### TECHNICAL FIELD

This relates generally to smart glasses portable charging cases that are configured to fold and unfold, and provide different charging options depending on whether the smart glasses portable charging case is in the folded state or unfolded state, e.g., the smart glasses portable charging case may be configured to charge a first subset of electronic devices when in the folded state and a second subset of devices that is greater than the first subset when in the unfolded state. In some embodiments, the charging case can also include a provision for housing and charging additional batteries for use in the pair of smart glasses.

### BACKGROUND

As smart glasses devices become more common place, charging them on the go will be a more desirable option to have. While charging cases exist for portable electronic devices (i.e., headphones), these charging cases are not configured to charge a smart glasses, let alone charging an ecosystem of devices for interacting with the pair of smart glasses.

As such, there is a need to address one or more of the above-identified challenges. A brief summary of solutions to the issues noted above are described below.

### SUMMARY

The present invention provides a portable smart glasses charging case, a wireless charging system as defined in the appended claims and a charging case for dual-position charging of an extended-reality glasses device and single-position charging of accessory devices as defined in the appended claims.

The devices and systems described herein allow users to not only charge a pair of smart glasses when away from a power source (e.g., a wall outlet), but also to charge peripheral devices associated with the pair of smart glasses (e.g., an intermediary processing device, controller(s), and wearable device, etc.) without having to carry multiple chargers. Having a device that is capable of charging multiple devices (e.g., at least three devices including a pair of smart glasses) is highly convenient for the end users as it greatly reduces the number of cables and chargers they need to bring with them while also allowing for extended run time of the smart glasses and peripherals.

In accordance with a first aspect, there is provided a portable smart glasses charging case, comprising:
a glasses-holding section configured to (i) hold a pair of smart glasses and (ii) deliver a charge to the pair of smart glasses;
a foldable section having:
   a folded state in which the foldable section is configured to cover the glasses-holding section while the pair of smart glasses continues to receive the charge;
   an unfolded state in which the foldable section lays substantially flat to reveal
      (i) a first section for delivering a charge to a first electronic device that is distinct from the pair of smart glasses and
      (ii) a second section for delivering a charge to a second electronic device that is distinct from the pair of smart glasses and the first electronic device,
wherein the pair of smart glasses continues to receive the charge while the first and second sections are delivering charges to the first and second electronic devices, respectively.

The first electronic device may be a wrist-wearable device.

The second electronic device may be an intermediary process device.

The folded state may have a triangular shape.

The folded state may not be configured to charge the first electronic device and the second electronic device.

The portable smart glasses charging case of claim 1, wherein the first section is configured to overlap and couple with the second section in the folded state to cover the glasses holding section.

The portable smart glasses charging case comprises a power supply configured to concurrently provide power to (i) the pair of smart glasses, (ii) the first electronic device, and (iii) the second electronic device.

In some embodiments, the pair of smart glasses are charged using a first charging protocol, and at least one of the first or second electronic device are charged via a second charging protocol.

The portable smart glasses charging case may be configured to receive power from a power supply via a single power receiver.

The power supply may be configured to store enough power to fully charge the pair of smart glasses, the first electronic device, and the second electronic device from an empty state of charge.

The foldable section comprises one or more magnets for maintaining the folded state.

The one or more magnets may be configured to secure at least one of: the pair of smart glasses, the first electronic device or the second electronic device.

The pair of smart glasses may be secured in the portable smart glasses charging case via a retention bracket located at a nose bridge of the smart glasses.

The retention bracket may comprise a pair of pins for supplying a charge to the pair of smart glasses.

At least one of the first electronic device and the second electronic device may be charged via a wireless charging protocol.

The pair of smart glasses may be extended-reality glasses.

In accordance with a second aspect, there is provided a wireless charging system, comprising:
a pair of smart glasses;
an electronic device different from the pair of smart glasses, and
a portable smart glasses charging case configured to charge at least the pair of smart glasses and the electronic device, wherein the portable smart glasses charging case comprises:
   a glasses-holding section configured to (i) hold the pair of smart glasses and (ii) deliver a charge to the pair of smart glasses;
   a foldable section having:
      a folded state in which the foldable section is configured to cover the glasses-holding section while the pair of smart glasses continues to receive the charge;
      an unfolded state in which the foldable section lays substantially flat to reveal
         (i) a first section for delivering a charge to the electronic device that is distinct from the pair of smart glasses and
         (ii) a second section for delivering a charge to another electronic device that is distinct from the pair of smart glasses and the electronic device,
wherein the pair of smart glasses continues to receive the charge while the first and second sections are delivering charges to the electronic device and the other electronic device, respectively.

The electronic device may be a wrist-wearable device.

The wireless charging system may comprise the other electronic device and the other electronic device is an intermediary process device.

The folded state may have a triangular shape.

In accordance with a third aspect, there is provided a charging case for dual-position charging of an extended-reality glasses device and single-position charging of accessory devices, comprising:
an upright charging stand comprising an internal power source, an external power source connector, and one or more electrical contacts, wherein an extended-reality glasses device is configured to mechanically couple with the upright charging stand and electrically couple with the one or more electrical contacts such that the upright charging stand provides power from the internal power source and/or an external power source via the external power source connector to charge the extended-reality glasses device when the charging case is in an open position and/or when the charging case is in a closed position;
a first wireless charging pad configured to wirelessly charge, using the internal power source or the external power source via the external power source connector, a first extended-reality accessory device distinct from the extended-reality glasses device when the charging case is in the open position and when the charging case is in the closed position the first wireless charging pad is disabled, wherein:
   the first wireless charging pad is connected with the upright charging stand via a first flexible section,
   the first wireless charging pad faces the upright charging stand when in the charging case is in the closed position, and
   the first wireless charging pad folds out relative to the upright charging stand when the charging case transitions from the closed position to the open position; and
a second wireless charging pad configured to wirelessly charge, using the internal power source or the external power source via the external power source connector, a second extended-reality accessory device distinct from the extended-reality glasses device when the charging case is in the open position and when the charging case is in the closed position the second wireless charging pad is disabled, wherein:
   the second wireless charging pad is connected with the upright charging stand via a second flexible section,
   the second wireless charging pad faces the upright charging stand when the charging case is in the closed position, and
   the second wireless charging pad folds out relative to the upright charging stand when the charging case transitions from the closed position to the open position.

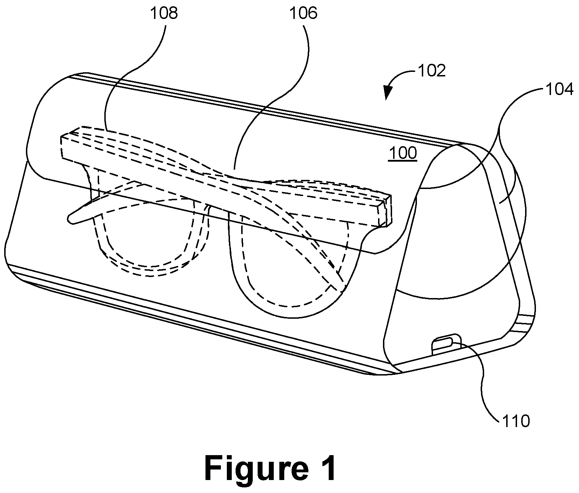

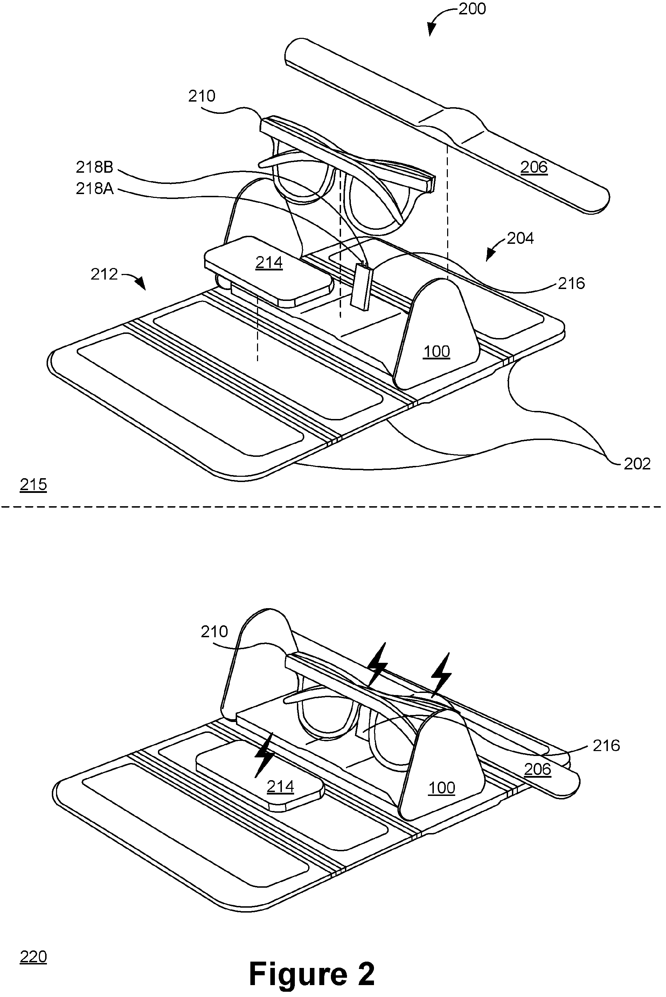

One example embodiment is described herein, in which a portable smart glasses charging case comprises a glasses-holding section (e.g., a glasses-holding section 106 shown in Figure 1) configured to (i) hold a pair of smart glasses (e.g., a pair of smart glasses 108 shown in Figure 1) and (ii) deliver a charge to the pair of smart glasses (e.g., a pair of extended-reality glasses that are configured to display one or more of a virtual reality, augmented reality, and mixed reality). The portable smart glasses charging case also comprises a foldable section (e.g., foldable section 104 shown in Figure 1 and foldable section 202 shown in Figure 2) having: a folded state (e.g., folded state 102 shown in Figure 1) in which the foldable section is configured to cover the glasses-holding section while the pair of smart glasses continues to receive the charge (e.g., where the portable charging case has a shape commonly associated with a traditional glasses case that is protecting a pair of traditional glasses); and an unfolded state in which the foldable section lays substantially flat to reveal (i) a first section for delivering a charge to a first electronic device that is distinct from the pair of smart glasses (e.g., the first section 204 delivers a charge to the first electronic device 206) and (ii) a second section for delivering a charge to a second electronic device that is distinct from the pair of smart glasses and the first electronic device (e.g., the second section 212 delivers a charge to the first electronic device 214). The pair of smart glasses continues to receive the charge while the first and second sections are delivering charges to the first and second electronic devices, respectively.

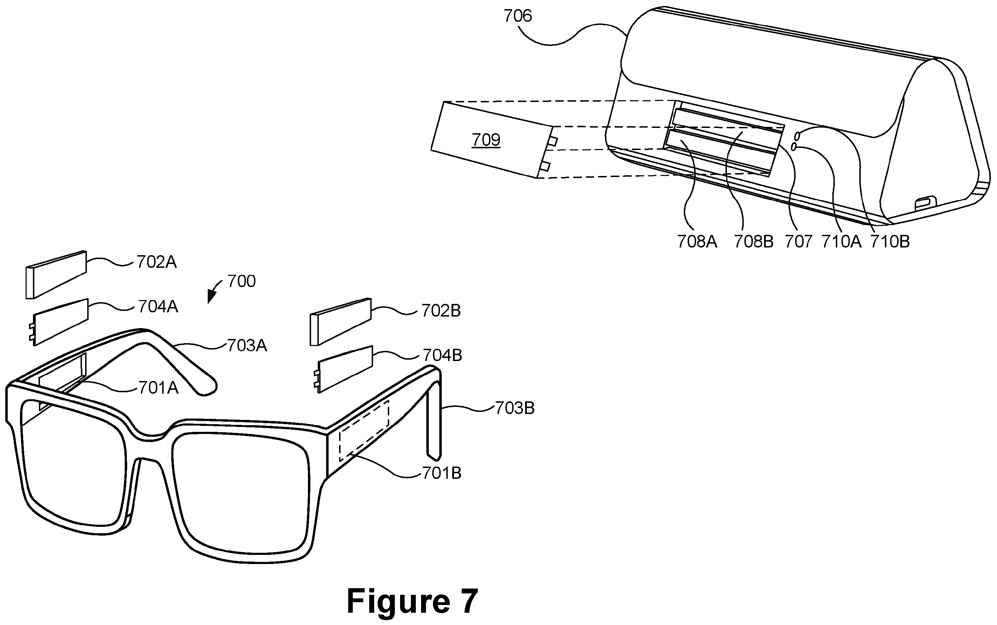

In another example a portable smart glasses charging case comprises a location for housing a pair of smart glasses, and the pair of smart glasses includes a user-removable battery. For example, Figure 7 illustrates a charging case 706 that houses a pair of glasses 700, and the pair of glasses 700 have user-removable temple arm batteries 702A and 702B. The portable smart glasses charging case further comprises a charging receptacle, different from the location for housing the pair of smart glasses, configured to store and charge the user-removable battery of the pair of smart glasses. For example, Figure 7 shows provision 707 for charging the user-removable temple arm batteries 702A and 702B can be located on the outside of the charging case 706.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates a portable smart glasses case that is configured to charge a pair of smart glasses and at least one other electronic device, in accordance with some embodiments.
Figure 2 illustrates the portable smart glasses case shown in Figure 1 in an unfolded state in which the foldable section lays substantially flat to reveal (i) a first section for delivering a charge to a first electronic device that is distinct from the pair of smart glasses and (ii) a second section for delivering a charge to a second electronic device that is distinct from the pair of smart glasses and the first electronic device, in accordance with some embodiments.
Figures 3A, 3B, 3C-1, 3C-2 illustrate example extended-reality systems, in accordance with some embodiments.
Figures 4A-4B illustrate an example wrist-wearable device 400, in accordance with some embodiments.
Figures 5A, 5B-1, 5B-2, and 5C illustrate example head-wearable devices, in accordance with some embodiments.
Figures 6A-6B illustrate an example handheld intermediary processing device, in accordance with some embodiments.
Figure 7 illustrates a pair of glasses that have a user-removable batteries located in at least cavities of the temple arms and the user-removable temple arm batteries can be charged in a location in a portable charging case, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, the invention being defined in the appended claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of extended-reality systems. Extended-reality as described herein, is any superimposed functionality and or sensory-detectable presentation provided by an extended-reality system within a user's physical surroundings. Such extended-realities can include and/or represent virtual reality (VR), augmented reality (AR), mixed-reality (MR), or some combination and/or variation one of these. For example, a user can perform a swiping in-air hand gesture to cause a song to be skipped by a song-providing Application Programming Interface (API) providing playback at, for example, a home speaker. An extended-reality environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments.

Extended-reality content can include completely generated content or generated content combined with captured (e.g., real-world) content. The extended-reality content can include video, audio, haptic events, or some combination thereof, any of which can be presented in a single channel or in multiple channels (such as stereo video that produces a three-dimensional effect to a viewer). Additionally, in some embodiments, extended-reality can also be associated with applications, products, accessories, services, or some combination thereof, which are used, for example, to create content in an extended reality and/or are otherwise used in (e.g., to perform activities in) an extended reality.

A hand gesture, as described herein, can include an in-air gesture, a surface-contact gesture, and/or other gestures that can be detected and determined based on movements of a single hand (e.g., a one-handed gesture performed with a user's hand that is detected by one or more sensors of a wearable device (e.g., electromyography (EMG) and/or inertial measurement units (IMU)s of a wrist-wearable device) and/or detected via image data captured by an imaging device of a wearable device (e.g., a camera of a head-wearable device)) or a combination of the user's hands. In-air means, in some embodiments, that the user hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single or double finger tap on a table, on a user's hand or another finger, on the user's leg, a couch, a steering wheel, etc.). The different hand gestures disclosed herein can be detected using image data and/or sensor data (e.g., neuromuscular signals sensed by one or more biopotential sensors (e.g., EMG sensors) or other types of data from other sensors, such as proximity sensors, time-of-flight (ToF) sensors, sensors of an inertial measurement unit, etc.) detected by a wearable device worn by the user and/or other electronic devices in the user's possession (e.g., smartphones, laptops, imaging devices, intermediary devices, and/or other devices described herein).

Figure 1 illustrates a portable smart glasses case 100, also referred to herein as an extended-reality headset, that is configured to charge a pair of smart glasses 108 and at least one other electronic device, in accordance with some embodiments. Figure 1 shows the portable smart glasses charging case 100 in a folded state 102, in which the foldable section 104 is configured to cover and protect the glasses-holding section 106 that is configured to contain a pair of smart glasses 108. The portable smart glasses charging case 100 includes an onboard battery (e.g., lithium-ion battery) that is configured to power and charge a battery of the pair of smart glasses 108 while they are placed in the smart glasses charging case 100. As shown when the smart glasses charging case 100 is in the folded state the smart glasses portable charging case 100 has a substantially triangular shape that mimics the shape of a traditional glasses case. As shown, the portable smart glasses case 100 is not configured to charge other devices besides the smart glasses 108 in the folded state 102. Figure 1 also illustrates a location 110 in which the portable charging case can receive a charge via a connector, such as a USB connection.

Figure 2 illustrates the portable smart glasses case 100 shown in Figure 1 in an unfolded state 200 in which the foldable section 202 lays substantially flat to reveal a (i) first section 204 for delivering a charge to a first electronic device 206 (e.g., a smart wrist-wearable device) that is distinct from the pair of smart glasses 210 (i.e., the same smart glasses as shown in Figure 1) and (ii) a second section 212 for delivering a charge to a second electronic device 214 (e.g., an intermediary processing device) that is distinct from the pair of smart glasses 210 and the first electronic device 206. In the unfolded state, the pair of smart glasses 210 continues to receive a charge while the first and second sections 204, 212 are delivering charges to the first and second electronic devices 206, 214, respectively.

Figure 2 shows in a first pane 215 that the smart glasses 210 about to be placed on a retention bracket 216 that is configured to secure the smart glasses 210 to the portable smart glasses case 100. The retention bracket 216 includes pins 218A and 218B configured to transmit a charge (and communicate) the smart glasses 210. As also shown in first pane 215, the first electronic device 206 and the second electronic device 214 are placed on their respective charging surfaces/sections and are configured to receive a charge via inductive charging. The respective charging surface can also include respective magnet(s) for positioning the first electronic device 206 and the second electronic device 214 for optimal charging. In some embodiments, the magnets used for securing/positioning the first electronic device 206 and the second electronic device 214 can be dual purpose and be used for securing the portable smart glasses case 100 in the folded state 102 shown in figure 1. In some embodiments, a Qi wireless charging protocol is used, which can incorporate magnets for securing the devices described above.

Figure 2 shows in a second pane 220 that the smart glasses 210, the first electronic device 206 and the second electronic device 214 are concurrently being charged by the portable smart glasses case 100. The portable smart glasses case 100 is configured to fully charge the smart glasses 210, the first electronic device 206 and the second electronic device 214 from a zero state of charge at least once. In other words, the portable charging case is configured to provide a full charge for each device, such that the user can use the devices for as long as possible while away from a power outlet. In some embodiments, the first electronic device 206 is configured to charge in an upright position. For example, the first section 204 can include a portion that is configured to move about a surface of the first section via a hinge, such that the first electronic device 206 can be charged at a different orientation. In some embodiments, the hinged portion can be spring loaded such that the hinged portion can pop up when the case is in the unfolded state 200. In some embodiments, the second electronic device 214 is configured to be charged in an upright position. For example, the second section 212 can include a portion that is configured to move about a surface of the first section via another hinge, such that the second electronic device 214 can be charged at a different orientation. In some embodiments, the other hinged portion can be spring loaded such that the hinged portion can pop up when the case is in the unfolded state 200.

In some embodiments, the portable smart glasses case 100 includes a prioritization algorithm for charging the pair of smart glasses 210, the first electronic device 206, and the second electronic device 214. In some embodiments, the portable smart glasses case 100 prioritizes charging the pair of smart glasses 210 over the first electronic device 206 and the second electronic device 214. In some embodiments, the first electronic device 2016 and the second electronic device 214 are configured to have all day battery life, thus recharging the first electronic device and the second electronic before the pair of smart glasses 210 can be unnecessary for continued use. In other words, if the battery on the first electronic device and the second electronic device are determined to be at levels that will be sufficient for the remainder of the day, then the portable smart glasses case 100 will forgo charging those devices and prioritize charging the pair of glasses and reserving excess battery of the portable smart glasses case for subsequent charges of the pair of glasses. In some embodiments, the time of day will dictate whether the first or second electronic device are charged. For example, if the portable smart glasses case 100 determines, e.g., using pattern recognition and onboard battery state of charge, that the pair of smart glasses 210 will need to be recharged multiple times during the day, the portable smart glasses case 100 can forgo charging the first electronic device and second electronic device to meet the anticipated charging demands of the pair of smart glasses later in the day. In some embodiments, the system can be used if at least one of the first electronic device or the second electronic device is charged, but cannot operate if the pair of smart glasses are not charged, thus prioritizing charging of the pair of smart glasses is preferred.

In some embodiments, the portable smart glasses case includes a battery that has a capacity ranging from 10-20 watt-hours.

In some embodiments, the portable charging case can include markings (e.g., pictures and/or text) on the first section 204 and the second section 212 to provide a visual indication to a user of where to place the first electronic device 206 and the second electronic device 214, respectively. In some embodiments, the first section 204 and second section 212 can have a microsuede layer that is heat embossed with the markings.

In some embodiments, the portable smart glasses case 100 can include LED indicators to indicate the charge status of each device (e.g., the pair of smart glasses 210, the first electronic device 206, and the second electronic device 214) and the charge status of portable smart glasses case 100. In some embodiments, the devices themselves can also indicate their charging status (e.g., an LED or display on the devices can indicate whether the device is charging). In some embodiments, one device can indicate the charge status of all three devices (e.g., the pair of smart glasses 210, the first electronic device 206, and the second electronic device 214) as well as the charge status of the portable smart glasses case 100.

In some embodiments, the first section 204 can be configured to charge either the first electronic device 206 or the second electronic device 214, and the second section 212 can also be configured to charge either the first electronic device 206 or the second electronic device 214.

Below are additional details about the portable smart glasses case 100 that is described above with reference to Figures 1 and 2.

(A1) In accordance with some embodiments, a portable smart glasses charging case comprises a glasses-holding section (e.g., a glasses-holding section 106 shown in Figure 1) configured to (i) hold a pair of smart glasses (e.g., a pair of smart glasses 108 shown in Figure 1) and (ii) deliver a charge to the pair of smart glasses (e.g., a pair of extended-reality glasses that are configured to display one or more of a virtual reality, augmented reality, and mixed reality). The portable smart glasses charging case also comprises a foldable section (e.g., foldable section 104 shown in Figure 1 and foldable section 202 shown in Figure 2) having: a folded state (e.g., folded state 102 shown in Figure 1) in which the foldable section is configured to cover the glasses-holding section while the pair of smart glasses continues to receive the charge (e.g., where the portable charging case has a shape commonly associated with a traditional glasses case that is protecting a pair of traditional glasses); and an unfolded state in which the foldable section lays substantially flat to reveal a (i) first section for delivering a charge to a first electronic device that is distinct from the pair of smart glasses (e.g., the first section 204 delivers a charge to the first electronic device 206) and (ii) a second section for delivering a charge to a second electronic device that is distinct from the pair of smart glasses and the first electronic device (e.g., the second section 212 delivers a charge to the second electronic device 214). The pair of smart glasses continues to receive the charge while the first and second sections are delivering charges to the first and second electronic devices, respectively.

(A2) In some embodiments of A1, the first electronic device is a wrist-wearable device (e.g., a wrist-wearable device that includes one or more sensors (e.g., electromyography sensor) configured to detect hand movements of a user for controlling an aspect of an extended-reality displayed at the pair of smart glasses). For example, Figure 2 shows first electronic device 206 that is a wrist-wearable device.

(A3) In some embodiments of any of A1-A2, the second electronic device is an intermediary process device (e.g., the intermediary processing device is configured to receive inputs for controlling an aspect of an extended-reality displayed at the pair of smart glasses). For example, Figure 2 shows that the portable smart glasses case 100 is configured to charge a second electronic device 214, which in some embodiments is a intermediary processing device.

(A4) In some embodiments of any of A1-A3, the folded state has a triangular shape (e.g., the charging case is a tri-fold case). For example, Figure 1 shows the portable smart glasses case 100 having a triangular shape when in the folded state.

(A5) In some embodiments of any of A1-A4, the folded state is not configured to charge the first electronic device and the second electronic device (e.g., the folded state only allows for the pair of smart glasses to be charged, as the other charging areas are no longer accessible to place the first electronic device and the second electronic device on the portable smart glasses charging case). For example, Figure 1 shows the folded state 102 charging the smart glasses 106 and not the first electronic device nor the second electronic device.

(A6) In some embodiments of any of A1-A5, the first portion is configured to overlap and couple with the second portion in the folded state to cover the glasses holding section. Figure 1 shows that the foldable section 104 overlaps with itself when in the folded state 102.

(A7) In some embodiments of any of A1-A6, the portable glasses charging case includes a power supply (e.g., a lithium battery with onboard electronics for facilitating charging) configured to concurrently provide power to (i) the pair of smart glasses, (ii) the first electronic device, and (iii) the second electronic device. In some embodiments, the pair of smart glasses are charged using a first charging protocol (e.g., DC charging via contact pins), and at least one of the first or second electronic device are charged via a second charging protocol (e.g., inductive charging by placing the first or second electronic device on a designating charging surface). Figure 1 shows a location 110 that is configured to receive charge to the portable smart glasses case 100.

(A8) In some embodiments of A7, the portable charging case is configured to receive power from a power supply via a single power receiver (e.g., USB type-C input). Figure 1 shows a location 110 that is configured to be a USB-C input in accordance with some embodiments.

(A9) In some embodiments of A7, the power supply (e.g., a battery) is configured store enough power to fully charge the pair of smart glasses, the first electronic device, and the second electronic device from an empty state of charge.

(A10) In some embodiments of any of A1-A9, the foldable section includes one or more magnets for maintaining the folded state.

(A11) In some embodiments of A10, one of the one or more magnets is used to secure at least one of: the pair of smart glasses, the first electronic device or the second electronic device.

(A12) In some embodiments of any of A1-A11, the pair of smart glasses are secured in the portable smart glasses charging case via a retention bracket located at a nose bridge of the smart glasses (e.g., the retention bracket includes one or more components configured to secure the pair of smart glasses to the charging pins).

(A13) In some embodiments of A12, the retention bracket includes a pair of pins for supplying a charge to the pair of smart glasses. For example, Figure 2 shows a retention bracket 216.

(A14) In some embodiments of A1-A13, at least one of the first electronic device and the second electronic device are charged via a wireless charging protocol (e.g., inductive charging). For example, Figure 2 illustrates (i) a first section 204 for delivering a charge to a first electronic device 206 and (ii) a second section 212 for delivering a charge to a second electronic device 214.

(A15) In some embodiments of A1-A14, the pair of smart glasses are extended-reality glasses (e.g., augmented reality glasses, mixed-reality glasses, virtual reality glasses, etc.).

(B1) In accordance with some embodiments, a charging case for dual-position charging (e.g., the charging case charges the extended-reality glasses when the charging case is either in the opened or closed position) of an extended-reality glasses device and single-position charging of accessory devices, comprises an upright charging stand including an internal power source, an external power source connector, and one or more electrical contacts, wherein an extended-reality glasses device is configured to mechanically couple with the upright charging stand and electrically couple with the one or more electrical contacts such that the upright charging stand provides power from the internal power source and/or an external power source via the external power source connector to charge the extended-reality glasses device when the charging case is in an open position and/or when the charging case is in a closed position. The charging case also comprises a first wireless charging pad configured to wirelessly charge, using the internal power source or the external power source via the external power source connector, a first extended-reality accessory device distinct from the extended-reality glasses device when the charging case is in the open position and when the charging case is in the closed position the first wireless charging pad is disabled. In some embodiments, the first wireless charging pad is connected with the upright charging stand via a first flexible section. In some embodiments, the first wireless charging pad faces the upright charging stand when in the charging case is in the closed position. In some embodiments, the first wireless charging pad folds out relative to the upright charging stand when the charging case transitions from the closed position to the open position. The charging case also comprises a second wireless charging pad configured to wirelessly charge, using the internal power source or the external power source via the external power source connector, a second extended-reality accessory device distinct from the extended-reality glasses device when the charging case is in the open position, and when the charging case is in the closed position the second wireless charging pad is disabled. In some embodiments, the second wireless charging pad is connected with the upright charging stand via a second flexible section. In some embodiments, the second wireless charging pad faces the upright charging stand when the charging case is in the closed position. In some embodiments, the second wireless charging pad folds out relative to the upright charging stand when the charging case transitions from the closed position to the open position.

(C1) A wireless charging system, comprises a pair of smart glasses, an electronic device different from the pair of smart glasses, and a portable smart glasses charging case configured to charge at lease the pair of smart glasses and the electronic device, wherein the portable smart glasses charging case is configured in accordance with any of A1-A15 and B1. In some embodiments, the wireless charging system further includes another electronic device different from the electronic device and the pair of extended-reality glasses.

(D1) In accordance with some embodiments, a portable smart glasses charging case comprises a location for housing a pair of smart glasses, wherein the pair of smart glasses includes a user-removable battery. For example, Figure 7 illustrates a charging case 706 that houses a pair of glasses 700, and the pair of glasses 700 have user-removable temple arm batteries 702A and 702B. The portable smart glasses charging case further comprises a charging receptacle, different from the location for housing the pair of smart glasses, configured to store and charge the user-removable battery of the pair of smart glasses. For example, Figure 7 shows provision 707 for charging the user-removable temple arm batteries 702A and 702B can be located on the outside of the charging case 706.

(D2) In some embodiments of D1, the user removable battery is configured to be placed within a temple of the pair of smart glasses. For example, Figure 7 illustrates a pair of glasses (e.g., an augmented-reality glasses or a pair of smart glasses) that have a user-removable batteries 702A and 702B located in cavities 701A and 701B of the temple arms 703A and 703B, respectively.

(D3) In some embodiments of any one of D1-D2, the charging receptacle is configured to store and charge at least one additional user-removable battery, wherein the smart glasses charging case is configured to charge the user-removable battery and the at least one additional user-removable battery concurrently. For example, Figure 7 shows that the charging case 706 can store an extra set of user-removable temple arm batteries 708A and 708B concurrently (e.g., two batteries at once).

(D4) In some embodiments of any one of D1-D3, the charging receptacle is located in an interior region of the smart glasses charging case. For example, Figure 7 shows a charging case 706 that can be unfold and when unfolded a battery can be placed for charging. When folded shut the battery will remain within the cavity that also stores the pair of smart glasses during transportation.

(D5) In some embodiments of D4, the interior region is configured to house the pair of smart glasses. For example, Figures 1 and 2 show the glasses being stored within the charging case.

(D6) In some embodiments of any one of D1-D5, the portable smart glasses charging case includes a region for storing and charging an additional device that is different from the pair of smart glasses and user-removable battery of the pair of smart glasses.

(D7) In some embodiments of any one of D1-D6, the portable smart glasses charging case includes an integrated battery that is configured to charge the user-removable battery and the pair of smart glasses.

(D8) In some embodiments of D7, the charging receptacle includes one or more charging components that are configured to transfer charge from the user-removable battery to one or more of another battery of the portable smart glasses charging case, the pair of smart glasses, and a device housed within the portable charging case. For example, the batteries placed within the provision 707 can power or charge devices in the charging case (e.g., integrated batteries, batteries located within a peripheral device, or charge onboard batteries of the pair of glasses).

(D9) In some embodiments of any one of D1-D8, the portable smart glasses charging case includes an indicator that is configured to provide charge information about the user-removable battery. For example, Figure 7 shows LEDs 710A and 710B which indicates the charge level of each battery placed within charging case 706.

(D10) In some embodiments of D9, the indicator is an LED and the indicator is further configured to provide charge information of the pair of smart glasses. For example, Figure 7 shows LEDs 710A and 710B which indicates the charge level of each battery placed within charging case 706 (e.g., red light indicating very low charge, yellow indicating partially charged, and green indicating fully or almost fully charged).

(D11) In some embodiments of D9, the portable glasses charging case provides battery information to the pair of smart glasses, and the pair of smart glasses are configured to present the battery information as an extended-reality (XR) augment.

(E1) In accordance with some embodiments, a pair of smart glasses, comprising a frame portion and a temple arm portion coupled to the frame, and the temple arm portion includes a cavity configured to house a user-removable battery that is configured to in part power the pair of smart glasses. The battery is further configured to be placed in a charging receptacle of a smart glasses charging case, and the smart glasses charging case is configured to store and charge the user-removable battery of the pair of smart glasses. For example, Figure 7 illustrates a pair of glasses 700 with user-removable temple arm batteries 704A and 704B. Further Figure 7 also shows that both the user-removable temple arm batteries 704A and 704B and the pair of glasses 700 can be placed within the portable charging case.

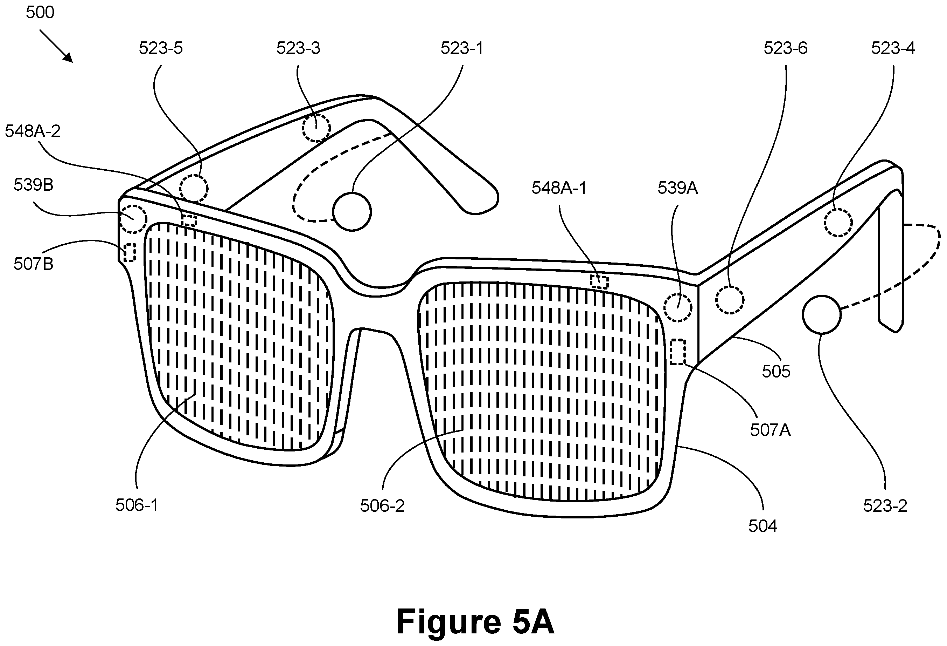

(E2) In some embodiments of E1, the pair of smart glasses are augmented-reality glasses. For example, at least Figure 5A shows an extended-reality glasses that can be an augmented-reality glasses.

(E3) In some embodiments of E1, the smart glasses charging case is configured in accordance with any one of D1-D11.

(F1) A system comprising (i) a pair of smart glasses (e.g., a pair of smart glasses 700 in Figure 7), and (ii) a portable smart glasses charging case (e.g., charging case 706 shown in Figure 7). The portable smart glasses charging case comprises a location for housing the pair of smart glasses (e.g., Figure 1 shows a portable smart glasses charging case that comprises a glasses-holding section 106 configured to hold a pair of smart glasses 108), wherein the pair of smart glasses includes a user-removable battery (e.g., Figure 7 shows a pair of glasses 700 that includes cavities 701A and 701B for housing user-removable batteries 702A and 702B). The portable charging case also includes a charging receptacle, different from the location for housing the pair of smart glasses, configured to store and charge the user-removable battery of the pair of smart glasses (e.g., provision 707 that is also configured to house and charge user-removable batteries 702A and 702B).

(F2) In some embodiments of F1, the pair of smart glasses and portable charging case are configured in accordance with any one of D1-D11 and E1-E2.

The devices described above are further detailed below, including systems, wrist-wearable devices, headset devices, and smart textile-based garments. Specific operations described above may occur as a result of specific hardware, such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device 400, a head-wearable device, an HIPD 600, a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes, and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications, (x) camera applications, (xi) web-based applications; (xii) health applications; (xiii) extended-reality applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes, and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example Extended-Reality Systems

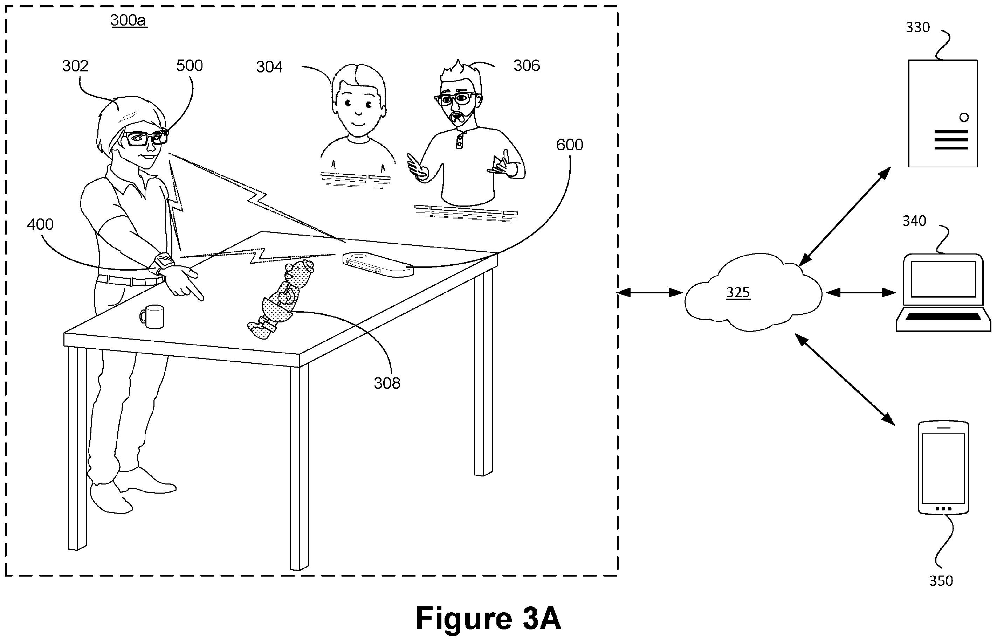

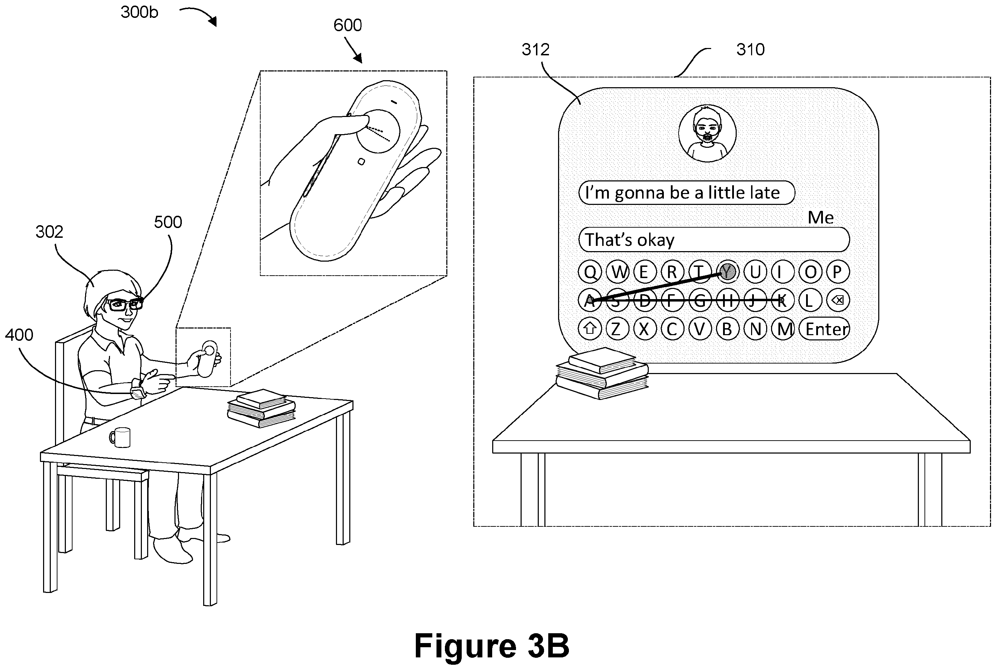

Figures 3A, 3B, 3C-1, and 3C-2 illustrate example extended-reality systems, in accordance with some embodiments. Figure 3A shows a first extended-reality system 300a and first example user interactions using a wrist-wearable device 400, a head-wearable device (e.g., extended-reality device 500), and/or a handheld intermediary processing device (HIPD) 600. Figure 3B shows a second extended-reality system 300b and second example user interactions using a wrist-wearable device 400, extended-reality device 500, and/or an HIPD 600. Figures 3C-1 and 3C-2 show a third extended-reality system 300c and third example user interactions using a wrist-wearable device 400, a head-wearable device (e.g., virtual-reality (VR) device 510), and/or an HIPD 600. As the skilled artisan will appreciate upon reading the descriptions provided herein, the above-example extended-reality systems (described in detail below) can perform various functions and/or operations.

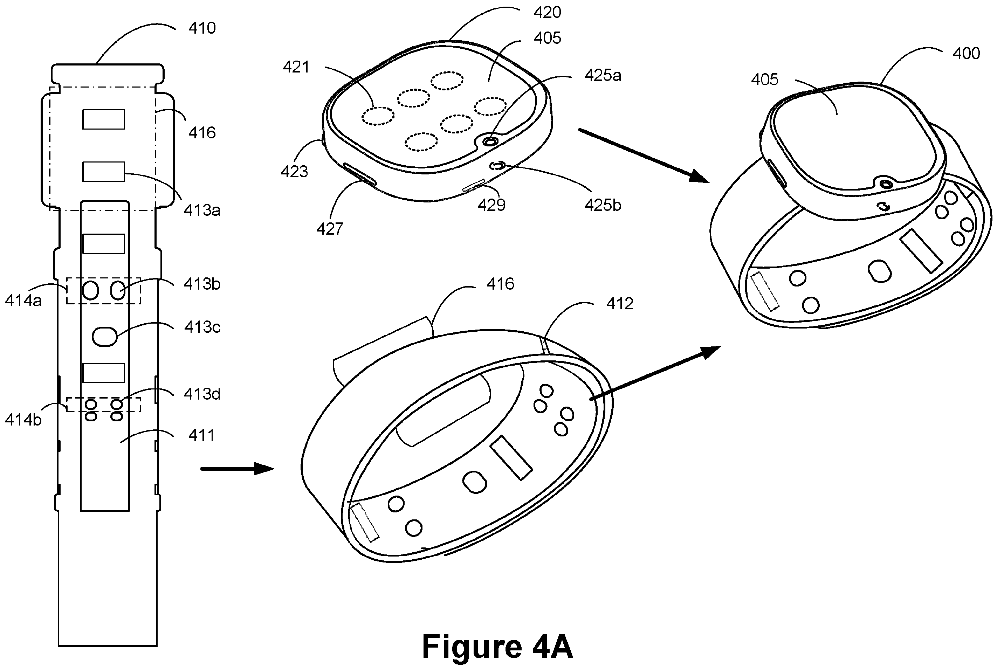

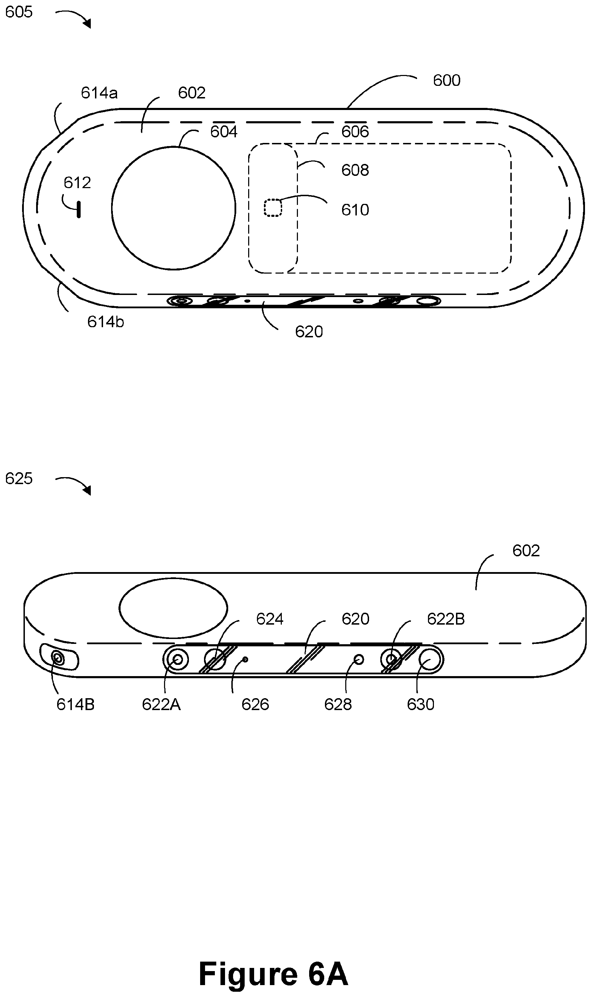

The wrist-wearable device 400 and its constituent components are described below in reference to Figures 4A-4B, the head-wearable devices and their constituent components are described below in reference to Figures 5A-5D, and the HIPD 600 and its constituent components are described below in reference to Figures 6A-6B. The wrist-wearable device 400, the head-wearable devices, and/or the HIPD 600 can communicatively couple via a network 325 (e.g., cellular, near field, Wi-Fi, personal area network, wireless LAN, etc.). Additionally, the wrist-wearable device 400, the head-wearable devices, and/or the HIPD 600 can also communicatively couple with one or more servers 330, computers 340 (e.g., laptops, computers, etc.), mobile devices 350 (e.g., smartphones, tablets, etc.), and/or other electronic devices via the network 325 (e.g., cellular, near field, Wi-Fi, personal area network, wireless LAN, etc.).

Turning to Figure 3A, a user 302 is shown wearing the wrist-wearable device 400 and the extended-reality device 500, and having the HIPD 600 on their desk. The wrist-wearable device 400, the extended-reality device 500, and the HIPD 600 facilitate user interaction with an extended-reality environment. In particular, as shown by the first extended-reality system 300a, the wrist-wearable device 400, the extended-reality device 500, and/or the HIPD 600 cause presentation of one or more avatars 304, digital representations of contacts 306, and virtual objects 308. As discussed below, the user 302 can interact with the one or more avatars 304, digital representations of the contacts 306, and virtual objects 308 via the wrist-wearable device 400, the extended-reality device 500, and/or the HIPD 600.

The user 302 can use any of the wrist-wearable device 400, the extended-reality device 500, and/or the HIPD 600 to provide user inputs. For example, the user 302 can perform one or more hand gestures that are detected by the wrist-wearable device 400 (e.g., using one or more EMG sensors and/or IMUs, described below in reference to Figures 4A-4B) and/or extended-reality device 500 (e.g., using one or more image sensors or cameras, described below in reference to Figures 5A-5B) to provide a user input. Alternatively, or additionally, the user 302 can provide a user input via one or more touch surfaces of the wrist-wearable device 400, the extended-reality device 500, and/or the HIPD 600, and/or voice commands captured by a microphone of the wrist-wearable device 400, the extended-reality device 500, and/or the HIPD 600. In some embodiments, the wrist-wearable device 400, the extended-reality device 500, and/or the HIPD 600 include a digital assistant to help the user in providing a user input (e.g., completing a sequence of operations, suggesting different operations or commands, providing reminders, confirming a command). In some embodiments, the user 302 can provide a user input via one or more facial gestures and/or facial expressions. For example, cameras of the wrist-wearable device 400, the extended-reality device 500, and/or the HIPD 600 can track the user 302's eyes for navigating a user interface.

The wrist-wearable device 400, the extended-reality device 500, and/or the HIPD 600 can operate alone or in conjunction to allow the user 302 to interact with the extended-reality environment. In some embodiments, the HIPD 600 is configured to operate as a central hub or control center for the wrist-wearable device 400, the extended-reality device 500, and/or another communicatively coupled device. For example, the user 302 can provide an input to interact with the extended-reality environment at any of the wrist-wearable device 400, the extended-reality device 500, and/or the HIPD 600, and the HIPD 600 can identify one or more back-end and front-end tasks to cause the performance of the requested interaction and distribute instructions to cause the performance of the one or more back-end and front-end tasks at the wrist-wearable device 400, the extended-reality device 500, and/or the HIPD 600. In some embodiments, a back-end task is a background-processing task that is not perceptible by the user (e.g., rendering content, decompression, compression, etc.), and a front-end task is a user-facing task that is perceptible to the user (e.g., presenting information to the user, providing feedback to the user, etc.)). As described below in reference to Figures 6A-6B, the HIPD 600 can perform the back-end tasks and provide the wrist-wearable device 400 and/or the extended-reality device 500 operational data corresponding to the performed back-end tasks such that the wrist-wearable device 400 and/or the extended-reality device 500 can perform the front-end tasks. In this way, the HIPD 600, which has more computational resources and greater thermal headroom than the wrist-wearable device 400 and/or the extended-reality device 500, performs computationally intensive tasks and reduces the computer resource utilization and/or power usage of the wrist-wearable device 400 and/or the extended-reality device 500.

In the example shown by the first extended-reality system 300a, the HIPD 600 identifies one or more back-end tasks and front-end tasks associated with a user request to initiate an extended-reality video call with one or more other users (represented by the avatar 304 and the digital representation of the contact 306) and distributes instructions to cause the performance of the one or more back-end tasks and front-end tasks. In particular, the HIPD 600 performs back-end tasks for processing and/or rendering image data (and other data) associated with the extended-reality video call and provides operational data associated with the performed back-end tasks to the extended-reality device 500 such that the extended-reality device 500 performs front-end tasks for presenting the extended-reality video call (e.g., presenting the avatar 304 and the digital representation of the contact 306).

In some embodiments, the HIPD 600 can operate as a focal or anchor point for causing the presentation of information. This allows the user 302 to be generally aware of where information is presented. For example, as shown in the first extended-reality system 300a, the avatar 304 and the digital representation of the contact 306 are presented above the HIPD 600. In particular, the HIPD 600 and the extended-reality device 500 operate in conjunction to determine a location for presenting the avatar 304 and the digital representation of the contact 306. In some embodiments, information can be presented within a predetermined distance from the HIPD 600 (e.g., within five meters). For example, as shown in the first extended-reality system 300a, virtual object 308 is presented on the desk some distance from the HIPD 600. Similar to the above example, the HIPD 600 and the extended-reality device 500 can operate in conjunction to determine a location for presenting the virtual object 308. Alternatively, in some embodiments, presentation of information is not bound by the HIPD 600. More specifically, the avatar 304, the digital representation of the contact 306, and the virtual object 308 do not have to be presented within a predetermined distance of the HIPD 600.

User inputs provided at the wrist-wearable device 400, the extended-reality device 500, and/or the HIPD 600 are coordinated such that the user can use any device to initiate, continue, and/or complete an operation. For example, the user 302 can provide a user input to the extended-reality device 500 to cause the extended-reality device 500 to present the virtual object 308 and, while the virtual object 308 is presented by the extended-reality device 500, the user 302 can provide one or more hand gestures via the wrist-wearable device 400 to interact and/or manipulate the virtual object 308.

Figure 3B shows the user 302 wearing the wrist-wearable device 400 and the extended-reality device 500, and holding the HIPD 600. In the second extended-reality system 300b, the wrist-wearable device 400, the extended-reality device 500, and/or the HIPD 600 are used to receive and/or provide one or more messages to a contact of the user 302. In particular, the wrist-wearable device 400, the extended-reality device 500, and/or the HIPD 600 detect and coordinate one or more user inputs to initiate a messaging application and prepare a response to a received message via the messaging application.

In some embodiments, the user 302 initiates, via a user input, an application on the wrist-wearable device 400, the extended-reality device 500, and/or the HIPD 600 that causes the application to initiate on at least one device. For example, in the second extended-reality system 300b the user 302 performs a hand gesture associated with a command for initiating a messaging application (represented by messaging user interface 312); the wrist-wearable device 400 detects the hand gesture; and, based on a determination that the user 302 is wearing extended-reality device 500, causes the extended-reality device 500 to present a messaging user interface 312 of the messaging application. The extended-reality device 500 can present the messaging user interface 312 to the user 302 via its display (e.g., as shown by user 302's field of view 310). In some embodiments, the application is initiated and can be run on the device (e.g., the wrist-wearable device 400, the extended-reality device 500, and/or the HIPD 600) that detects the user input to initiate the application, and the device provides another device operational data to cause the presentation of the messaging application. For example, the wrist-wearable device 400 can detect the user input to initiate a messaging application, initiate and run the messaging application, and provide operational data to the extended-reality device 500 and/or the HIPD 600 to cause presentation of the messaging application. Alternatively, the application can be initiated and run at a device other than the device that detected the user input. For example, the wrist-wearable device 400 can detect the hand gesture associated with initiating the messaging application and cause the HIPD 600 to run the messaging application and coordinate the presentation of the messaging application.

Further, the user 302 can provide a user input provided at the wrist-wearable device 400, the extended-reality device 500, and/or the HIPD 600 to continue and/or complete an operation initiated at another device. For example, after initiating the messaging application via the wrist-wearable device 400 and while the extended-reality device 500 presents the messaging user interface 312, the user 302 can provide an input at the HIPD 600 to prepare a response (e.g., shown by the swipe gesture performed on the HIPD 600). The user 302's gestures performed on the HIPD 600 can be provided and/or displayed on another device. For example, the user 302's swipe gestures performed on the HIPD 600 are displayed on a virtual keyboard of the messaging user interface 312 displayed by the extended-reality device 500.

In some embodiments, the wrist-wearable device 400, the extended-reality device 500, the HIPD 600, and/or other communicatively coupled devices can present one or more notifications to the user 302. The notification can be an indication of a new message, an incoming call, an application update, a status update, etc. The user 302 can select the notification via the wrist-wearable device 400, the extended-reality device 500, or the HIPD 600 and cause presentation of an application or operation associated with the notification on at least one device. For example, the user 302 can receive a notification that a message was received at the wrist-wearable device 400, the extended-reality device 500, the HIPD 600, and/or other communicatively coupled device and provide a user input at the wrist-wearable device 400, the extended-reality device 500, and/or the HIPD 600 to review the notification, and the device detecting the user input can cause an application associated with the notification to be initiated and/or presented at the wrist-wearable device 400, the extended-reality device 500, and/or the HIPD 600.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the extended-reality device 500 can present to the user 302 game application data and the HIPD 600 can use a controller to provide inputs to the game. Similarly, the user 302 can use the wrist-wearable device 400 to initiate a camera of the extended-reality device 500, and the user can use the wrist-wearable device 400, the extended-reality device 500, and/or the HIPD 600 to manipulate the image capture (e.g., zoom in or out, apply filters, etc.) and capture image data.

Turning to Figures 3C-1 and 3C-2, the user 302 is shown wearing the wrist-wearable device 400 and a VR device 510, and holding the HIPD 600. In the third extended-reality system 300c, the wrist-wearable device 400, the VR device 510, and/or the HIPD 600 are used to interact within an extended-reality environment, such as a VR game or other extended-reality application. While the VR device 510 present a representation of a VR game (e.g., first extended-reality game environment 320) to the user 302, the wrist-wearable device 400, the VR device 510, and/or the HIPD 600 detect and coordinate one or more user inputs to allow the user 302 to interact with the VR game.

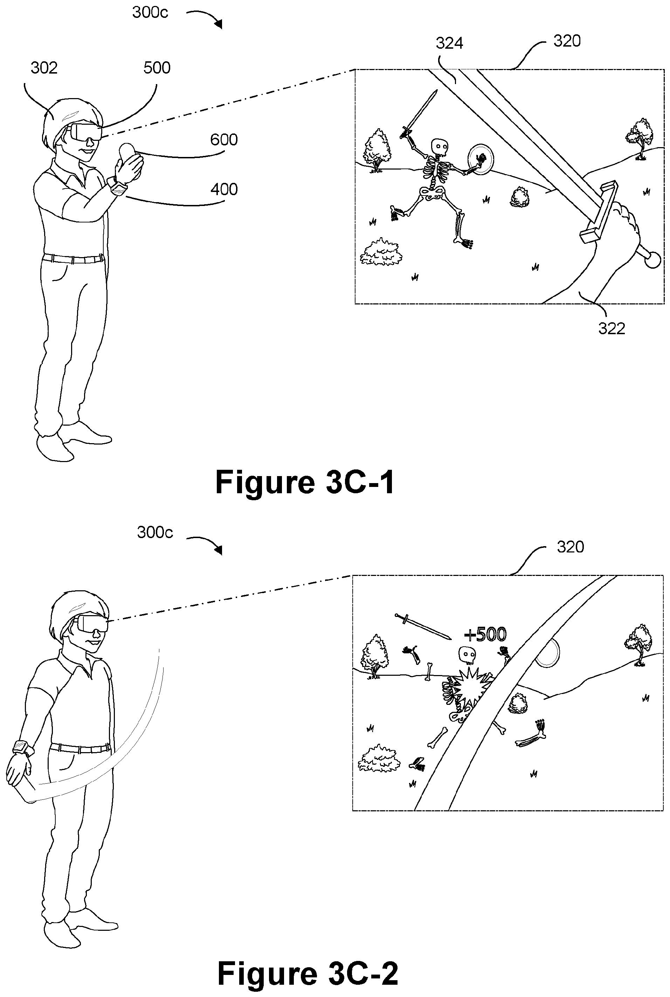

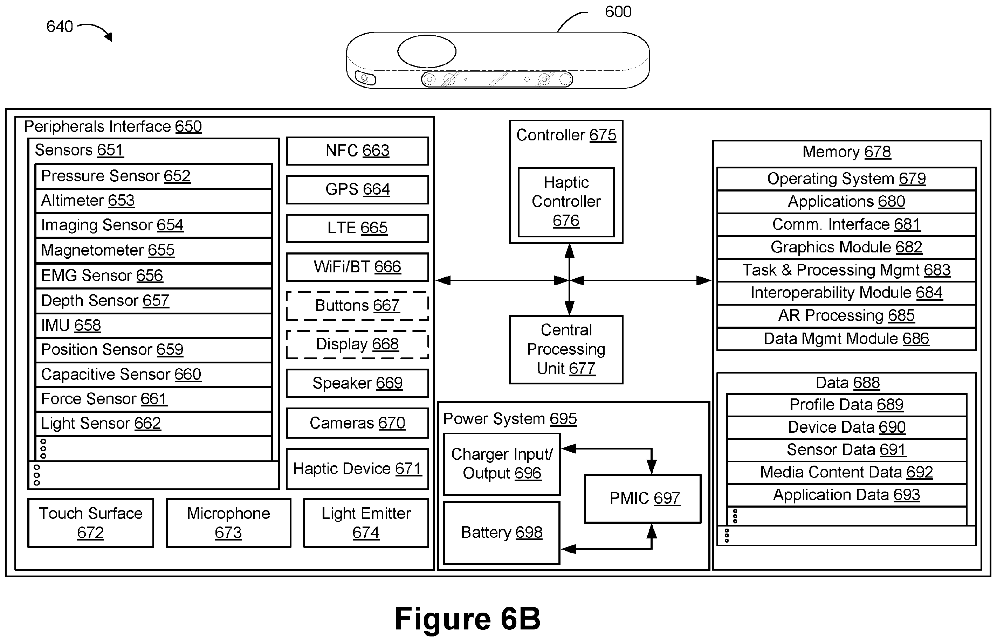

In some embodiments, the user 302 can provide a user input via the wrist-wearable device 400, the VR device 510, and/or the HIPD 600 that causes an action in a corresponding extended-reality environment. For example, the user 302 in the third extended-reality system 300c (shown in Figure 3C-1) raises the HIPD 600 to prepare for a swing in the first extended-reality game environment 320. The VR device 510, responsive to the user 302 raising the HIPD 600, causes the extended-reality representation of the user 322 to perform a similar action (e.g., raise a virtual object, such as a virtual sword 324). In some embodiments, each device uses respective sensor data and/or image data to detect the user input and provide an accurate representation of the user 302's motion. For example, image sensors 658 (e.g., SLAM cameras or other cameras discussed below in Figures 6A and 6B) of the HIPD 600 can be used to detect a position of the 600 relative to the user 302's body such that the virtual object can be positioned appropriately within the first extended-reality game environment 320; sensor data from the wrist-wearable device 400 can be used to detect a velocity at which the user 302 raises the HIPD 600 such that the extended-reality representation of the user 322 and the virtual sword 324 are synchronized with the user 302's movements; and image sensors 526 (Figures 5A-5C) of the VR device 510 can be used to represent the user 302's body, boundary conditions, or real-world objects within the first extended-reality game environment 320.

In Figure 3C-2, the user 302 performs a downward swing while holding the HIPD 600. The user 302's downward swing is detected by the wrist-wearable device 400, the VR device 510, and/or the HIPD 600 and a corresponding action is performed in the first extended-reality game environment 320. In some embodiments, the data captured by each device is used to improve the user's experience within the extended-reality environment. For example, sensor data of the wrist-wearable device 400 can be used to determine a speed and/or force at which the downward swing is performed and image sensors of the HIPD 600 and/or the VR device 510 can be used to determine a location of the swing and how it should be represented in the first extended-reality game environment 320, which, in turn, can be used as inputs for the extended-reality environment (e.g., game mechanics, which can use detected speed, force, locations, and/or aspects of the user 302's actions to classify a user's inputs (e.g., user performs a light strike, hard strike, critical strike, glancing strike, miss) or calculate an output (e.g., amount of damage)).

While the wrist-wearable device 400, the VR device 510, and/or the HIPD 600 are described as detecting user inputs, in some embodiments, user inputs are detected at a single device (with the single device being responsible for distributing signals to the other devices for performing the user input). For example, the HIPD 600 can operate an application for generating the first extended-reality game environment 320 and provide the VR device 510 with corresponding data for causing the presentation of the first extended-reality game environment 320, as well as detect the 302's movements (while holding the HIPD 600) to cause the performance of corresponding actions within the first extended-reality game environment 320. Additionally or alternatively, in some embodiments, operational data (e.g., sensor data, image data, application data, device data, and/or other data) of one or more devices is provide to a single device (e.g., the HIPD 600) to process the operational data and cause respective devices to perform an action associated with processed operational data.

Having discussed example extended-reality systems, devices for interacting with such extended-reality systems, and other computing systems more generally, will now be discussed in greater detail below. Some definitions of devices and components that can be included in some or all of the example devices discussed below are defined here for ease of reference. A skilled artisan will appreciate that certain types of the components described below may be more suitable for a particular set of devices, and less suitable for a different set of devices. But subsequent reference to the components defined here should be considered to be encompassed by the definitions provided.

In some embodiments discussed below example devices and systems, including electronic devices and systems, will be discussed. Such example devices and systems are not intended to be limiting, and one of skill in the art will understand that alternative devices and systems to the example devices and systems described herein may be used to perform the operations and construct the systems and device that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

### Example Wrist-Wearable Devices

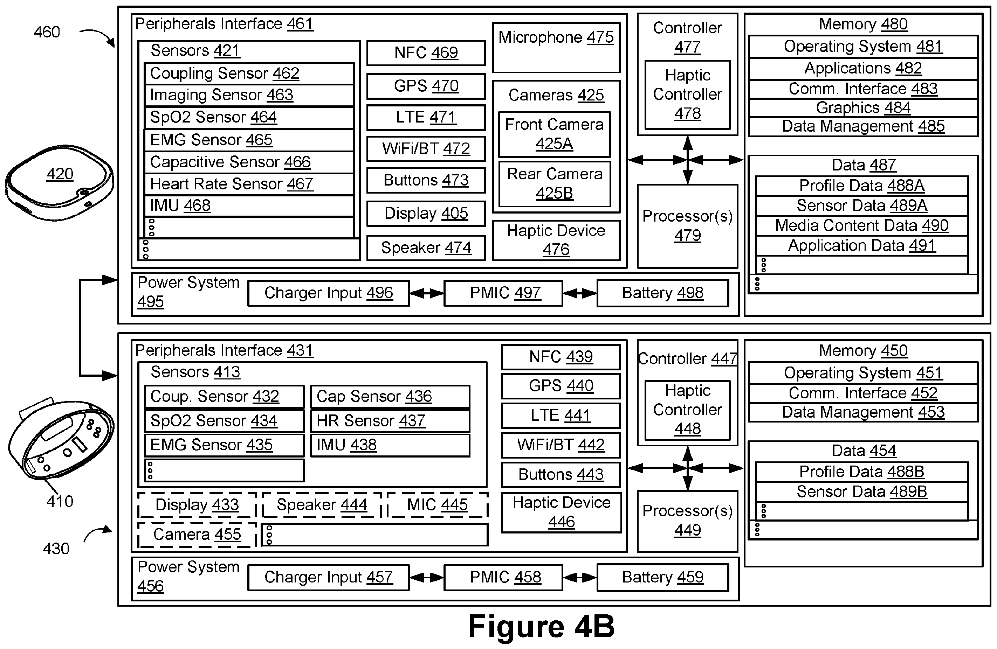

Figures 4A and 4B illustrate an example wrist-wearable device 400, in accordance with some embodiments. The wrist-wearable device 400 is an instance of the wearable device 206 described in reference to Figure 2 herein, such that the wrist-wearable devices should be understood to have the features of the wrist-wearable device 400 and vice versa. Figure 4A illustrates components of the wrist-wearable device 400, which can be used individually or in combination, including combinations that include other electronic devices and/or electronic components.

Figure 4A shows a wearable band 410 and a watch body 420 (or capsule) being coupled, as discussed below, to form the wrist-wearable device 400. The wrist-wearable device 400 can perform various functions and/or operations associated with navigating through user interfaces and selectively opening applications.

As will be described in more detail below, operations executed by the wrist-wearable device 400 can include (i) presenting content to a user (e.g., displaying visual content via a display 405); (ii) detecting (e.g., sensing) user input (e.g., sensing a touch on peripheral button 423 and/or at a touch screen of the display 405, a hand gesture detected by sensors (e.g., biopotential sensors)); (iii) sensing biometric data via one or more sensors 413 (e.g., neuromuscular signals, heart rate, temperature, sleep, etc.); messaging (e.g., text, speech, video, etc.); image capture via one or more imaging devices or cameras 425; wireless communications (e.g., cellular, near field, Wi-Fi, personal area network, etc.); location determination; financial transactions; providing haptic feedback; alarms; notifications; biometric authentication; health monitoring; sleep monitoring.

The above-example functions can be executed independently in the watch body 420, independently in the wearable band 410, and/or via an electronic communication between the watch body 420 and the wearable band 410. In some embodiments, functions can be executed on the wrist-wearable device 400 while an extended-reality environment is being presented (e.g., via one of the extended-reality systems 300a to 300d). As the skilled artisan will appreciate upon reading the descriptions provided herein, the novel wearable devices described herein can be used with other types of extended-reality environments.

The wearable band 410 can be configured to be worn by a user such that an inner (or inside) surface of the wearable structure 411 of the wearable band 410 is in contact with the user's skin. When worn by a user, sensors 413 contact the user's skin. The sensors 413 can sense biometric data such as a user's heart rate, saturated oxygen level, temperature, sweat level, neuromuscular signal sensors, or a combination thereof. The sensors 413 can also sense data about a user's environment, including a user's motion, altitude, location, orientation, gait, acceleration, position, or a combination thereof. In some embodiments, the sensors 413 are configured to track a position and/or motion of the wearable band 410. The one or more sensors 413 can include any of the sensors defined above and/or discussed below with respect to Figure 4B.

The one or more sensors 413 can be distributed on an inside and/or an outside surface of the wearable band 410. In some embodiments, the one or more sensors 413 are uniformly spaced along the wearable band 410. Alternatively, in some embodiments, the one or more sensors 413 are positioned at distinct points along the wearable band 410. As shown in Figure 4A, the one or more sensors 413 can be the same or distinct. For example, in some embodiments, the one or more sensors 413 can be shaped as a pill (e.g., sensor 413a), an oval, a circle a square, an oblong (e.g., sensor 413c) and/or any other shape that maintains contact with the user's skin (e.g., such that neuromuscular signal and/or other biometric data can be accurately measured at the user's skin). In some embodiments, the one or more sensors 413 are aligned to form pairs of sensors (e.g., for sensing neuromuscular signals based on differential sensing within each respective sensor). For example, sensor 413b is aligned with an adjacent sensor to form sensor pair 414a and sensor 413d is aligned with an adjacent sensor to form sensor pair 414b. In some embodiments, the wearable band 410 does not have a sensor pair. Alternatively, in some embodiments, the wearable band 410 has a predetermined number of sensor pairs (one pair of sensors, three pairs of sensors, four pairs of sensors, six pairs of sensors, sixteen pairs of sensors, etc.).

The wearable band 410 can include any suitable number of sensors 413. In some embodiments, the number and arrangements of sensors 413 depend on the particular application for which the wearable band 410 is used. For instance, a wearable band 410 configured as an armband, wristband, or chest-band may include a plurality of sensors 413 with different number of sensors 413 and different arrangement for each use case, such as medical use cases, compared to gaming or general day-to-day use cases.

In accordance with some embodiments, the wearable band 410 further includes an electrical ground electrode and a shielding electrode. The electrical ground and shielding electrodes, like the sensors 413, can be distributed on the inside surface of the wearable band 410 such that they contact a portion of the user's skin. For example, the electrical ground and shielding electrodes can be at an inside surface of coupling mechanism 416 or an inside surface of a wearable structure 411. The electrical ground and shielding electrodes can be formed and/or use the same components as the sensors 413. In some embodiments, the wearable band 410 includes more than one electrical ground electrode and more than one shielding electrode.

The sensors 413 can be formed as part of the wearable structure 411 of the wearable band 410. In some embodiments, the sensors 413 are flush or substantially flush with the wearable structure 411 such that they do not extend beyond the surface of the wearable structure 411. While flush with the wearable structure 411, the sensors 413 are still configured to contact the user's skin (e.g., via a skin-contacting surface). Alternatively, in some embodiments, the sensors 413 extend beyond the wearable structure 411 a predetermined distance (e.g., 0.1 mm to 2 mm) to make contact and depress into the user's skin. In some embodiments, the sensors 413 are coupled to an actuator (not shown) configured to adjust an extension height (e.g., a distance from the surface of the wearable structure 411) of the sensors 413 such that the sensors 413 make contact and depress into the user's skin. In some embodiments, the actuators adjust the extension height between 0.01 mm to 1.2 mm. This allows the user to customize the positioning of the sensors 413 to improve the overall comfort of the wearable band 410 when worn while still allowing the sensors 413 to contact the user's skin. In some embodiments, the sensors 413 are indistinguishable from the wearable structure 411 when worn by the user.

The wearable structure 411 can be formed of an elastic material, elastomers, etc., configured to be stretched and fitted to be worn by the user. In some embodiments, the wearable structure 411 is a textile or woven fabric. As described above, the sensors 413 can be formed as part of a wearable structure 411. For example, the sensors 413 can be molded into the wearable structure 411 or be integrated into a woven fabric (e.g., the sensors 413 can be sewn into the fabric and mimic the pliability of fabric (e.g., the sensors 413 can be constructed from a series of woven strands of fabric)).

The wearable structure 411 can include flexible electronic connectors that interconnect the sensors 413, the electronic circuitry, and/or other electronic components (described below in reference to Figure 4B) that are enclosed in the wearable band 410. In some embodiments, the flexible electronic connectors are configured to interconnect the sensors 413, the electronic circuitry, and/or other electronic components of the wearable band 410 with respective sensors and/or other electronic components of another electronic device (e.g., watch body 420). The flexible electronic connectors are configured to move with the wearable structure 411 such that the user adjustment to the wearable structure 411 (e.g., resizing, pulling, folding, etc.) does not stress or strain the electrical coupling of components of the wearable band 410.

As described above, the wearable band 410 is configured to be worn by a user. In particular, the wearable band 410 can be shaped or otherwise manipulated to be worn by a user. For example, the wearable band 410 can be shaped to have a substantially circular shape such that it can be configured to be worn on the user's lower arm or wrist. Alternatively, the wearable band 410 can be shaped to be worn on another body part of the user, such as the user's upper arm (e.g., around a bicep), forearm, chest, legs, etc. The wearable band 410 can include a retaining mechanism 412 (e.g., a buckle, a hook and loop fastener, etc.) for securing the wearable band 410 to the user's wrist or other body part. While the wearable band 410 is worn by the user, the sensors 413 sense data (referred to as sensor data) from the user's skin. In particular, the sensors 413 of the wearable band 410 obtain (e.g., sense and record) neuromuscular signals.

The sensed data (e.g., sensed neuromuscular signals) can be used to detect and/or determine the user's intention to perform certain motor actions. In particular, the sensors 413 sense and record neuromuscular signals from the user as the user performs muscular activations (e.g., movements, gestures, etc.). The detected and/or determined motor actions (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 405 of the wrist-wearable device 400 and/or can be transmitted to a device responsible for rendering an extended-reality environment (e.g., a head-mounted display) to perform an action in an associated extended-reality environment, such as to control the motion of a virtual device displayed to the user. The muscular activations performed by the user can include static gestures, such as placing the user's hand palm down on a table; dynamic gestures, such as grasping a physical or virtual object; and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 413 can be used to provide a user with an enhanced interaction with a physical object (e.g., devices communicatively coupled with the wearable band 410) and/or a virtual object in an extended-reality application generated by an extended-reality system (e.g., user interface objects presented on the display 405 or another computing device (e.g., a smartphone)).

In some embodiments, the wearable band 410 includes one or more haptic devices 446 (Figure 4B; e.g., a vibratory haptic actuator) that are configured to provide haptic feedback (e.g., a cutaneous and/or kinesthetic sensation, etc.) to the user's skin. The sensors 413, and/or the haptic devices 446 can be configured to operate in conjunction with multiple applications including, without limitation, health monitoring, social media, games, and extended reality (e.g., the applications associated with extended reality).

The wearable band 410 can also include coupling mechanism 416 (e.g., a cradle or a shape of the coupling mechanism can correspond to shape of the watch body 420 of the wrist-wearable device 400) for detachably coupling a capsule (e.g., a computing unit) or watch body 420 (via a coupling surface of the watch body 420) to the wearable band 410. In particular, the coupling mechanism 416 can be configured to receive a coupling surface proximate to the bottom side of the watch body 420 (e.g., a side opposite to a front side of the watch body 420 where the display 405 is located), such that a user can push the watch body 420 downward into the coupling mechanism 416 to attach the watch body 420 to the coupling mechanism 416. In some embodiments, the coupling mechanism 416 can be configured to receive a top side of the watch body 420 (e.g., a side proximate to the front side of the watch body 420 where the display 405 is located) that is pushed upward into the cradle, as opposed to being pushed downward into the coupling mechanism 416. In some embodiments, the coupling mechanism 416 is an integrated component of the wearable band 410 such that the wearable band 410 and the coupling mechanism 416 are a single unitary structure. In some embodiments, the coupling mechanism 416 is a type of frame or shell that allows the watch body 420 coupling surface to be retained within or on the wearable band 410 coupling mechanism 416 (e.g., a cradle, a tracker band, a support base, a clasp, etc.).

The coupling mechanism 416 can allow for the watch body 420 to be detachably coupled to the wearable band 410 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 420 to the wearable band 410 and to decouple the watch body 420 from the wearable band 410. For example, a user can twist, slide, turn, push, pull, or rotate the watch body 420 relative to the wearable band 410, or a combination thereof, to attach the watch body 420 to the wearable band 410 and to detach the watch body 420 from the wearable band 410. Alternatively, as discussed below, in some embodiments, the watch body 420 can be decoupled from the wearable band 410 by actuation of the release mechanism 429.

The wearable band 410 can be coupled with a watch body 420 to increase the functionality of the wearable band 410 (e.g., converting the wearable band 410 into a wrist-wearable device 400, adding an additional computing unit and/or battery to increase computational resources and/or a battery life of the wearable band 410, adding additional sensors to improve sensed data, etc.). As described above, the wearable band 410 (and the coupling mechanism 416) is configured to operate independently (e.g., execute functions independently) from watch body 420. For example, the coupling mechanism 416 can include one or more sensors 413 that contact a user's skin when the wearable band 410 is worn by the user and provide sensor data for determining control commands.

A user can detach the watch body 420 (or capsule) from the wearable band 410 in order to reduce the encumbrance of the wrist-wearable device 400 to the user. For embodiments in which the watch body 420 is removable, the watch body 420 can be referred to as a removable structure, such that in these embodiments the wrist-wearable device 400 includes a wearable portion (e.g., the wearable band 410) and a removable structure (the watch body 420).

Turning to the watch body 420, the watch body 420 can have a substantially rectangular or circular shape. The watch body 420 is configured to be worn by the user on their wrist or on another body part. More specifically, the watch body 420 is sized to be easily carried by the user, attached on a portion of the user's clothing, and/or coupled to the wearable band 410 (forming the wrist-wearable device 400). As described above, the watch body 420 can have a shape corresponding to the coupling mechanism 416 of the wearable band 410. In some embodiments, the watch body 420 includes a single release mechanism 429 or multiple release mechanisms (e.g., two release mechanisms 429 positioned on opposing sides of the watch body 420, such as spring-loaded buttons) for decoupling the watch body 420 and the wearable band 410. The release mechanism 429 can include, without limitation, a button, a knob, a plunger, a handle, a lever, a fastener, a clasp, a dial, a latch, or a combination thereof.

A user can actuate the release mechanism 429 by pushing, turning, lifting, depressing, shifting, or performing other actions on the release mechanism 429. Actuation of the release mechanism 429 can release (e.g., decouple) the watch body 420 from the coupling mechanism 416 of the wearable band 410, allowing the user to use the watch body 420 independently from wearable band 410, and vice versa. For example, decoupling the watch body 420 from the wearable band 410 can allow the user to capture images using rear-facing camera 425B. Although the coupling mechanism 416 is shown positioned at a corner of watch body 420, the release mechanism 429 can be positioned anywhere on watch body 420 that is convenient for the user to actuate. In addition, in some embodiments, the wearable band 410 can also include a respective release mechanism for decoupling the watch body 420 from the coupling mechanism 416. In some embodiments, the release mechanism 429 is optional and the watch body 420 can be decoupled from the coupling mechanism 416 as described above (e.g., via twisting, rotating, etc.).

The watch body 420 can include one or more peripheral buttons 423 and 427 for performing various operations at the watch body 420. For example, the peripheral buttons 423 and 427 can be used to turn on or wake (e.g., transition from a sleep state to an active state) the display 405, unlock the watch body 420, increase or decrease a volume, increase or decrease brightness, interact with one or more applications, interact with one or more user interfaces, etc. Additionally, or alternatively, in some embodiments, the display 405 operates as a touch screen and allows the user to provide one or more inputs for interacting with the watch body 420.

In some embodiments, the watch body 420 includes one or more sensors 421. The sensors 421 of the watch body 420 can be the same or distinct from the sensors 413 of the wearable band 410. The sensors 421 of the watch body 420 can be distributed on an inside and/or an outside surface of the watch body 420. In some embodiments, the sensors 421 are configured to contact a user's skin when the watch body 420 is worn by the user. For example, the sensors 421 can be placed on the bottom side of the watch body 420 and the coupling mechanism 416 can be a cradle with an opening that allows the bottom side of the watch body 420 to directly contact the user's skin. Alternatively, in some embodiments, the watch body 420 does not include sensors that are configured to contact the user's skin (e.g., including sensors internal and/or external to the watch body 420 that configured to sense data of the watch body 420 and the watch body 420's surrounding environment). In some embodiments, the sensors 413 are configured to track a position and/or motion of the watch body 420.

The watch body 420 and the wearable band 410 can share data using a wired communication method (e.g., a Universal Asynchronous Receiver/Transmitter (UART), a USB transceiver, etc.) and/or a wireless communication method (e.g., near field communication, Bluetooth, etc.). For example, the watch body 420 and the wearable band 410 can share data sensed by the sensors 413 and 421, as well as application- and device-specific information (e.g., active and/or available applications), output devices (e.g., display, speakers, etc.), input devices (e.g., touch screen, microphone, imaging sensors, etc.).

In some embodiments, the watch body 420 can include, without limitation, a front-facing camera 425A and/or a rear-facing camera 425B, sensors 421 (e.g., a biometric sensor, an IMU sensor, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 463; Figure 4B), a touch sensor, a sweat sensor, etc.). In some embodiments, the watch body 420 can include one or more haptic devices 476 (Figure 4B; a vibratory haptic actuator) that is configured to provide haptic feedback (e.g., a cutaneous and/or kinesthetic sensation, etc.) to the user. The sensors 421 and/or the haptic device 476 can also be configured to operate in conjunction with multiple applications including, without limitation, health-monitoring applications, social media applications, game applications, and extended-reality applications (e.g., the applications associated with extended reality).

As described above, the watch body 420 and the wearable band 410, when coupled, can form the wrist-wearable device 400. When coupled, the watch body 420 and wearable band 410 operate as a single device to execute functions (operations, detections, communications, etc.) described herein. In some embodiments, each device is provided with particular instructions for performing the one or more operations of the wrist-wearable device 400. For example, in accordance with a determination that the watch body 420 does not include neuromuscular signal sensors, the wearable band 410 can include alternative instructions for performing associated instructions (e.g., providing sensed neuromuscular signal data to the watch body 420 via a different electronic device). Operations of the wrist-wearable device 400 can be performed by the watch body 420 alone or in conjunction with the wearable band 410 (e.g., via respective processors and/or hardware components) and vice versa. In some embodiments, operations of the wrist-wearable device 400, the watch body 420, and/or the wearable band 410 can be performed in conjunction with one or more processors and/or hardware components of another communicatively coupled device (e.g., the HIPD 600; Figures 6A-6B).

As described below with reference to the block diagram of Figure 4B, the wearable band 410 and/or the watch body 420 can each include independent resources required to independently execute functions. For example, the wearable band 410 and/or the watch body 420 can each include a power source (e.g., a battery), a memory, data storage, a processor (e.g., a central processing unit (CPU)), communications, a light source, and/or input/output devices.

Figure 4B shows block diagrams of a computing system 430 corresponding to the wearable band 410, and a computing system 460 corresponding to the watch body 420, according to some embodiments. A computing system of the wrist-wearable device 400 includes a combination of components of the wearable band computing system 430 and the watch body computing system 460, in accordance with some embodiments.

The watch body 420 and/or the wearable band 410 can include one or more components shown in watch body computing system 460. In some embodiments, a single integrated circuit includes all or a substantial portion of the components of the watch body computing system 460 are included in a single integrated circuit. Alternatively, in some embodiments, components of the watch body computing system 460 are included in a plurality of integrated circuits that are communicatively coupled. In some embodiments, the watch body computing system 460 is configured to couple (e.g., via a wired or wireless connection) with the wearable band computing system 430, which allows the computing systems to share components, distribute tasks, and/or perform other operations described herein (individually or as a single device).

The watch body computing system 460 can include one or more processors 479, a controller 477, a peripherals interface 461, a power system 495, and memory (e.g., a memory 480), each of which are defined above and described in more detail below.

The power system 495 can include a charger input 496, a power-management integrated circuit (PMIC) 497, and a battery 498, each are which are defined above. In some embodiments, a watch body 420 and a wearable band 410 can have respective charger inputs (e.g., charger input 496 and 457), respective batteries (e.g., battery 498 and 459), and can share power with each other (e.g., the watch body 420 can power and/or charge the wearable band 410, and vice versa). Although watch body 420 and/or the wearable band 410 can include respective charger inputs, a single charger input can charge both devices when coupled. The watch body 420 and the wearable band 410 can receive a charge using a variety of techniques. In some embodiments, the watch body 420 and the wearable band 410 can use a wired charging assembly (e.g., power cords) to receive the charge. Alternatively, or in addition, the watch body 420 and/or the wearable band 410 can be configured for wireless charging. For example, a portable charging device can be designed to mate with a portion of watch body 420 and/or wearable band 410 and wirelessly deliver usable power to a battery of watch body 420 and/or wearable band 410. The watch body 420 and the wearable band 410 can have independent power systems (e.g., power system 495 and 456) to enable each to operate independently. The watch body 420 and wearable band 410 can also share power (e.g., one can charge the other) via respective PMICs (e.g., PMICs 497 and 458) that can share power over power and ground conductors and/or over wireless charging antennas.

In some embodiments, the peripherals interface 461 can include one or more sensors 421, many of which listed below are defined above. The sensors 421 can include one or more coupling sensors 462 for detecting when the watch body 420 is coupled with another electronic device (e.g., a wearable band 410). The sensors 421 can include imaging sensors 463 (one or more of the cameras 425 and/or separate imaging sensors 463 (e.g., thermal-imaging sensors)). In some embodiments, the sensors 421 include one or more SpO2 sensors 464. In some embodiments, the sensors 421 include one or more biopotential-signal sensors (e.g., EMG sensors 465, which may be disposed on a user-facing portion of the watch body 420 and/or the wearable band 410). In some embodiments, the sensors 421 include one or more capacitive sensors 466. In some embodiments, the sensors 421 include one or more heart rate sensors 467. In some embodiments, the sensors 421 include one or more IMUs 468. In some embodiments, one or more IMUs 468 can be configured to detect movement of a user's hand or other location that the watch body 420 is placed or held.

In some embodiments, the peripherals interface 461 includes an NFC component 469, a global-position system (GPS) component 470, a long-term evolution (LTE) component 471, and/or a Wi-Fi and/or Bluetooth communication component 472. In some embodiments, the peripherals interface 461 includes one or more buttons 473 (e.g., the peripheral buttons 423 and 427 in Figure 4A), which, when selected by a user, cause operations to be performed at the watch body 420. In some embodiments, the peripherals interface 461 includes one or more indicators, such as a light emitting diode (LED), to provide a user with visual indicators (e.g., message received, low battery, an active microphone, and/or a camera, etc.).

The watch body 420 can include at least one display 405 for displaying visual representations of information or data to the user, including user-interface elements and/or three-dimensional (3D) virtual objects. The display can also include a touch screen for inputting user inputs, such as touch gestures, swipe gestures, and the like. The watch body 420 can include at least one speaker 474 and at least one microphone 475 for providing audio signals to the user and receiving audio input from the user. The user can provide user inputs through the microphone 475 and can also receive audio output from the speaker 474 as part of a haptic event provided by the haptic controller 478. The watch body 420 can include at least one camera 425, including a front-facing camera 425A and a rear-facing camera 425B. The cameras 425 can include ultra-wide-angle cameras, wide-angle cameras, fish-eye cameras, spherical cameras, telephoto cameras, a depth-sensing cameras, or other types of cameras.

The watch body computing system 460 can include one or more haptic controllers 478 and associated componentry (e.g., haptic devices 476) for providing haptic events at the watch body 420 (e.g., a vibrating sensation or audio output in response to an event at the watch body 420). The haptic controllers 478 can communicate with one or more haptic devices 476, such as electroacoustic devices, including a speaker of the one or more speakers 474 and/or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). The haptic controller 478 can provide haptic events to respective haptic actuators that are capable of being sensed by a user of the watch body 420. In some embodiments, the one or more haptic controllers 478 can receive input signals from an application of the applications 482.

In some embodiments, the computer system 430 and/or the computer system 460 can include memory 480, which can be controlled by a memory controller of the one or more controllers 477 and/or one or more processors 479. In some embodiments, software components stored in the memory 480 include one or more applications 482 configured to perform operations at the watch body 420. In some embodiments, the one or more applications 482 include games, word processors, messaging applications, calling applications, web browsers, social media applications, media streaming applications, financial applications, calendars, clocks, etc. In some embodiments, software components stored in the memory 480 include one or more communication interface modules 483 as defined above. In some embodiments, software components stored in the memory 480 include one or more graphics modules 484 for rendering, encoding, and/or decoding audio and/or visual data; and one or more data management modules 485 for collecting, organizing, and/or providing access to the data 487 stored in memory 480. In some embodiments, one or more of applications 482 and/or one or more modules can work in conjunction with one another to perform various tasks at the watch body 420.

In some embodiments, software components stored in the memory 480 can include one or more operating systems 481 (e.g., a Linux-based operating system, an Android operating system, etc.). The memory 480 can also include data 487. The data 487 can include profile data 488A, sensor data 489A, media content data 490, and application data 491.

It should be appreciated that the watch body computing system 460 is an example of a computing system within the watch body 420, and that the watch body 420 can have more or fewer components than shown in the watch body computing system 460, combine two or more components, and/or have a different configuration and/or arrangement of the components. The various components shown in watch body computing system 460 are implemented in hardware, software, firmware, or a combination thereof, including one or more signal processing and/or application-specific integrated circuits.

Turning to the wearable band computing system 430, one or more components that can be included in the wearable band 410 are shown. The wearable band computing system 430 can include more or fewer components than shown in the watch body computing system 460, combine two or more components, and/or have a different configuration and/or arrangement of some or all of the components. In some embodiments, all, or a substantial portion of the components of the wearable band computing system 430 are included in a single integrated circuit. Alternatively, in some embodiments, components of the wearable band computing system 430 are included in a plurality of integrated circuits that are communicatively coupled. As described above, in some embodiments, the wearable band computing system 430 is configured to couple (e.g., via a wired or wireless connection) with the watch body computing system 460, which allows the computing systems to share components, distribute tasks, and/or perform other operations described herein (individually or as a single device).

The wearable band computing system 430, similar to the watch body computing system 460, can include one or more processors 449, one or more controllers 447 (including one or more haptics controller 448), a peripherals interface 431 that can include one or more sensors 413 and other peripheral devices, power source (e.g., a power system 456), and memory (e.g., a memory 450) that includes an operating system (e.g., an operating system 451), data (e.g., data 454 including profile data 488B, sensor data 489B, etc.), and one or more modules (e.g., a communications interface module 452, a data management module 453, etc.).

The one or more sensors 413 can be analogous to sensors 421 of the computer system 460 in light of the definitions above. For example, sensors 413 can include one or more coupling sensors 432, one or more SpO2 sensors 434, one or more EMG sensors 435, one or more capacitive sensors 436, one or more heart rate sensors 437, and one or more IMU sensors 438.

The peripherals interface 431 can also include other components analogous to those included in the peripheral interface 461 of the computer system 460, including an NFC component 439, a GPS component 440, an LTE component 441, a Wi-Fi and/or Bluetooth communication component 442, and/or one or more haptic devices 476 as described above in reference to peripherals interface 461. In some embodiments, the peripherals interface 431 includes one or more buttons 443, a display 433, a speaker 444, a microphone 445, and a camera 455. In some embodiments, the peripherals interface 431 includes one or more indicators, such as an LED.

It should be appreciated that the wearable band computing system 430 is an example of a computing system within the wearable band 410, and that the wearable band 410 can have more or fewer components than shown in the wearable band computing system 430, combine two or more components, and/or have a different configuration and/or arrangement of the components. The various components shown in wearable band computing system 430 can be implemented in one or a combination of hardware, software, and firmware, including one or more signal processing and/or application-specific integrated circuits.

The wrist-wearable device 400 with respect to Figures 4A is an example of the wearable band 410 and the watch body 420 coupled, so the wrist-wearable device 400 will be understood to include the components shown and described for the wearable band computing system 430 and the watch body computing system 460. In some embodiments, wrist-wearable device 400 has a split architecture (e.g., a split mechanical architecture or a split electrical architecture) between the watch body 420 and the wearable band 410. In other words, all of the components shown in the wearable band computing system 430 and the watch body computing system 460 can be housed or otherwise disposed in a combined watch device 400, or within individual components of the watch body 420, wearable band 410, and/or portions thereof (e.g., a coupling mechanism 416 of the wearable band 410).

The techniques described above can be used with any device for sensing neuromuscular signals, including the arm-wearable devices of Figure 4A-4B, but could also be used with other types of wearable devices for sensing neuromuscular signals (such as body-wearable or head-wearable devices that might have neuromuscular sensors closer to the brain or spinal column).

In some embodiments, a wrist-wearable device 400 can be used in conjunction with a head-wearable device described below (e.g., extended-reality device 500 and VR device 510) and/or an HIPD 600, and the wrist-wearable device 400 can also be configured to be used to allow a user to control aspect of the extended reality (e.g., by using EMG-based gestures to control user interface objects in the extended reality and/or by allowing a user to interact with the touchscreen on the wrist-wearable device to also control aspects of the extended reality). Having thus described example wrist-wearable device, attention will now be turned to example head-wearable devices, such extended-reality device 500 and VR device 510.

### Example Head-Wearable Devices

Figures 5A, 5B-1, 5B-2, and 5C show example head-wearable devices, in accordance with some embodiments. Head-wearable devices can include, but are not limited to, extended-reality devices 510 (e.g., extended-reality or smart eyewear devices, such as smart glasses, smart monocles, smart contacts, etc.), VR devices 510 (e.g., VR headsets, head-mounted displays (HMD)s, etc.), or other ocularly coupled devices. The extended-reality devices 500 and the VR devices 510 are instances of the pair of smart glasses described in reference to Figures 1 and 2 herein, such that the head-wearable device should be understood to have the features of the extended-reality devices 500 and/or the VR devices 510, and vice versa. The extended-reality devices 500 and the VR devices 510 can perform various functions and/or operations associated with navigating through user interfaces and selectively opening applications.

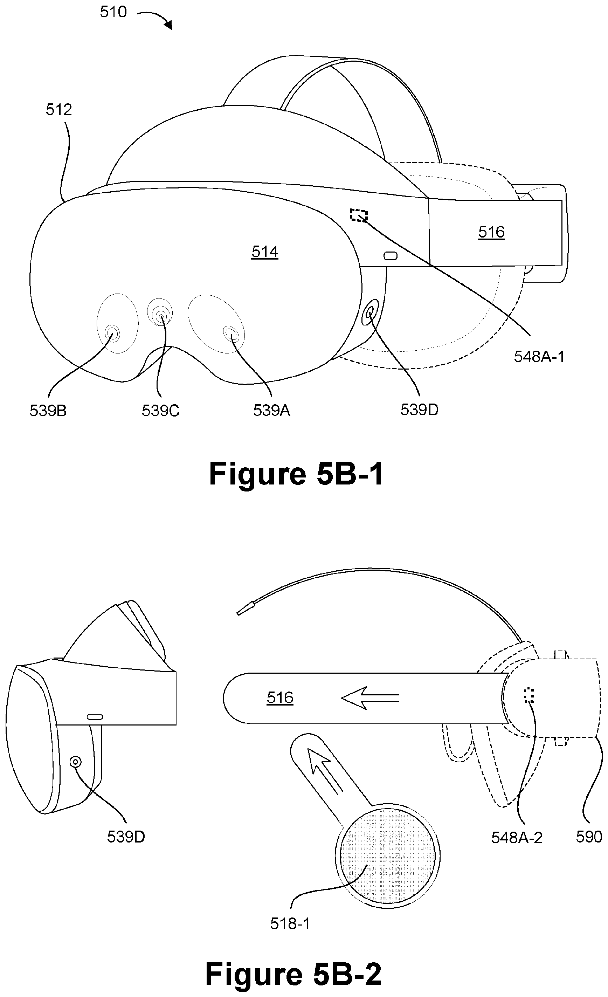

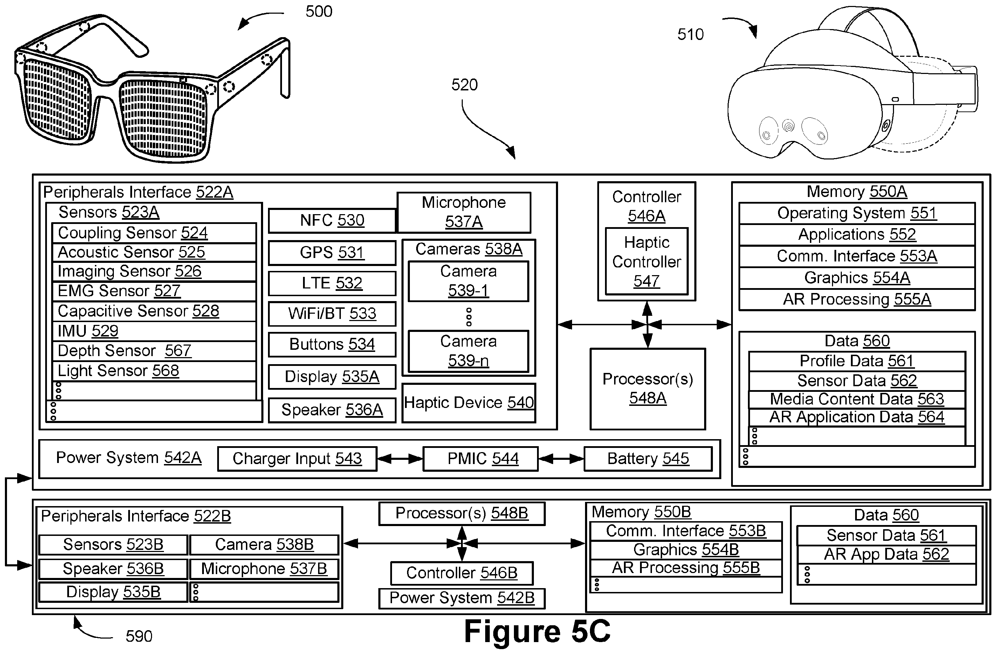

In some embodiments, an extended-reality system (e.g., extended-reality systems 300a-300d; Figures 3A-3C-2) includes an extended-reality device 500 (as shown in Figure 5A) and/or VR device 510 (as shown in Figures 5B-1-B-2). In some embodiments, the extended-reality device 500 and the VR device 510 can include one or more analogous components (e.g., components for presenting interactive extended-reality environments, such as processors, memory, and/or presentation devices, including one or more displays and/or one or more waveguides), some of which are described in more detail with respect to Figure 5C. The head-wearable devices can use display projectors (e.g., display projector assemblies 507A and 507B) and/or waveguides for projecting representations of data to a user. Some embodiments of head-wearable devices do not include displays.

Figure 5A shows an example visual depiction of the extended-reality device 500 (e.g., which may also be described herein as augmented-reality glasses and/or smart glasses). The extended-reality device 500 can work in conjunction with additional electronic components that are not shown in Figures 5A, such as a wearable accessory device and/or an intermediary processing device, in electronic communication or otherwise configured to be used in conjunction with the extended-reality device 500. In some embodiments, the wearable accessory device and/or the intermediary processing device may be configured to couple with the extended-reality device 500 via a coupling mechanism in electronic communication with a coupling sensor 524, where the coupling sensor 524 can detect when an electronic device becomes physically or electronically coupled with the extended-reality device 500. In some embodiments, the extended-reality device 500 can be configured to couple to a housing (e.g., a portion of frame 504 or temple arms 505), which may include one or more additional coupling mechanisms configured to couple with additional accessory devices. The components shown in Figure 5A can be implemented in hardware, software, firmware, or a combination thereof, including one or more signal-processing components and/or application-specific integrated circuits (ASICs).

The extended-reality device 500 includes mechanical glasses components, including a frame 504 configured to hold one or more lenses (e.g., one or both lenses 506-1 and 506-2). One of ordinary skill in the art will appreciate that the extended-reality device 500 can include additional mechanical components, such as hinges configured to allow portions of the frame 504 of the extended-reality device 500 to be folded and unfolded, a bridge configured to span the gap between the lenses 506-1 and 506-2 and rest on the user's nose, nose pads configured to rest on the bridge of the nose and provide support for the extended-reality device 500, earpieces configured to rest on the user's ears and provide additional support for the extended-reality device 500, temple arms 505 configured to extend from the hinges to the earpieces of the extended-reality device 500, and the like. One of ordinary skill in the art will further appreciate that some examples of the extended-reality device 500 can include none of the mechanical components described herein. For example, smart contact lenses configured to present extended-reality to users may not include any components of the extended-reality device 500.

The lenses 506-1 and 506-2 can be individual displays or display devices (e.g., a waveguide for projected representations). The lenses 506-1 and 506-2 may act together or independently to present an image or series of images to a user. In some embodiments, the lenses 506-1 and 506-2 can operate in conjunction with one or more display projector assemblies 507A and 507B to present image data to a user. While the extended-reality device 500 includes two displays, embodiments of this disclosure may be implemented in extended-reality devices with a single near-eye display (NED) or more than two NEDs.

The extended-reality device 500 includes electronic components, many of which will be described in more detail below with respect to Figure 5C. Some example electronic components are illustrated in Figure 5A, including sensors 523-1, 523-2, 523-3,. 523-4, 523-5, and 523-6, which can be distributed along a substantial portion of the frame 504 of the extended-reality device 500. The different types of sensors are described below in reference to Figure 5C. The extended-reality device 500 also includes a left camera 539A and a right camera 539B, which are located on different sides of the frame 504. And the eyewear device includes one or more processors 548A and 548B (e.g., an integral microprocessor, such as an ASIC) that is embedded into a portion of the frame 504.

Figures 5B-1 and 5B-2 show an example visual depiction of the VR device 510 (e.g., a head-mounted display (HMD) 512, also referred to herein as an extended-reality headset, a head-wearable device, a VR headset, etc.). The HMD 512 includes a front body 514 and a frame 516 (e.g., a strap or band) shaped to fit around a user's head. In some embodiments, the front body 514 and/or the frame 516 includes one or more electronic elements for facilitating presentation of and/or interactions with an extended-reality and/or VR system (e.g., displays, processors (e.g., processor 548A-1), IMUs, tracking emitter or detectors, sensors, etc.). In some embodiments, the HMD 512 includes output audio transducers (e.g., an audio transducer 518-1), as shown in Figure 5B-2. In some embodiments, one or more components, such as the output audio transducer(s) 518-1 and the frame 516, can be configured to attach and detach (e.g., are detachably attachable) to the HMD 512 (e.g., a portion or all of the frame 516, and/or the output audio transducer 518-1), as shown in Figure 5B-2. In some embodiments, coupling a detachable component to the HMD 512 causes the detachable component to come into electronic communication with the HMD 512. The VR device 510 includes electronic components, many of which will be described in more detail below with respect to Figure 5C

Figure 5B-1 to 5B-2 also show that the VR device 510 one or more cameras, such as the left camera 539A and the right camera 539B, which can be analogous to the left and right cameras on the frame 504 of the extended-reality device 500. In some embodiments, the VR device 510 includes one or more additional cameras (e.g., cameras 539C and 539D), which can be configured to augment image data obtained by the cameras 539A and 539B by providing more information. For example, the camera 539C can be used to supply color information that is not discerned by cameras 539A and 539B. In some embodiments, one or more of the cameras 539A to 539D can include an optional IR cut filter configured to remove IR light from being received at the respective camera sensors.

The VR device 510 can include a housing 590 storing one or more components of the VR device 510 and/or additional components of the VR device 510. The housing 590 can be a modular electronic device configured to couple with the VR device 510 (or an extended-reality device 500) and supplement and/or extend the capabilities of the VR device 510 (or an extended-reality device 500). For example, the housing 590 can include additional sensors, cameras, power sources, processors (e.g., processor 548A-2), etc. to improve and/or increase the functionality of the VR device 510. Examples of the different components included in the housing 590 are described below in reference to Figure 5C.

Alternatively or in addition, in some embodiments, the head-wearable device, such as the VR device 510 and/or the extended-reality device 500), includes, or is communicatively coupled to, another external device (e.g., a paired device), such as an HIPD 6 (discussed below in reference to Figures 6A-6B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckband may also apply to various other paired devices, such as smart watches, smart phones, wrist bands, other wearable devices, hand-held controllers, tablet computers, or laptop computers.

In some situations, pairing external devices, such as an intermediary processing device (e.g., an HIPD device 600, an optional neckband, and/or wearable accessory device) with the head-wearable devices (e.g., an extended-reality device 500 and/or VR device 510) enables the head-wearable devices to achieve a similar form factor of a pair of glasses while still providing sufficient battery and computation power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable devices overall while allowing the head-wearable devices to retain its desired functionality. For example, the intermediary processing device (e.g., the HIPD 600) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on the head-wearable devices, standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an extended-reality environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, storage, etc.) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, like an HIPD 600, can process information generated by one or more sensors of its sensors and/or information provided by other communicatively coupled devices. For example, a head-wearable device can include an IMU, and the intermediary processing device (neckband and/or an HIPD 600) can compute all inertial and spatial calculations from the IMUs located on the head-wearable device. Additional examples of processing performed by a communicatively coupled device, such as the HIPD 600, are provided below in reference to Figures 6A and 6B.

Extended-reality systems may include a variety of types of visual feedback mechanisms. For example, display devices in the extended-reality devices 500 and/or the VR devices 510 may include one or more liquid-crystal displays (LCDs), light emitting diode (LED) displays, organic LED (OLED) displays, and/or any other suitable type of display screen. Extended-reality systems may include a single display screen for both eyes or may provide a display screen for each eye, which may allow for additional flexibility for varifocal adjustments or for correcting a refractive error associated with the user's vision. Some extended-reality systems also include optical subsystems having one or more lenses (e.g., conventional concave or convex lenses, Fresnel lenses, or adjustable liquid lenses) through which a user may view a display screen. In addition to or instead of using display screens, some extended-reality systems include one or more projection systems. For example, display devices in the extended-reality device 500 and/or the VR device 510 may include micro-LED projectors that project light (e.g., using a waveguide) into display devices, such as clear combiner lenses that allow ambient light to pass through. The display devices may refract the projected light toward a user's pupil and may enable a user to simultaneously view both extended-reality content and the real world. Extended-reality systems may also be configured with any other suitable type or form of image projection system. As noted, some extended-reality systems may, instead of blending an extended reality with actual reality, substantially replace one or more of a user's sensory perceptions of the real world with a virtual experience.

While the example head-wearable devices are respectively described herein as the extended-reality device 500 and the VR device 510, either or both of the example head-wearable devices described herein can be configured to present fully-immersive VR scenes presented in substantially all of a user's field of view, additionally or alternatively to, subtler augmented-reality scenes that are presented within a portion, less than all, of the user's field of view.

In some embodiments, the extended-reality device 500 and/or the VR device 510 can include haptic feedback systems. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other extended-reality devices, within other extended-reality devices, and/or in conjunction with other extended-reality devices (e.g., wrist-wearable devices which may be incorporated into headwear, gloves, body suits, handheld controllers, environmental devices (e.g., chairs or floormats), and/or any other type of device or system, such as a wrist-wearable device 400, an HIPD 600, smart textile-based garment, etc.), and/or other devices described herein.

Figure 5C illustrates a computing system 520 and an optional housing 590, each of which show components that can be included in a head-wearable device (e.g., the extended-reality device 500 and/or the VR device 510). In some embodiments, more or less components can be included in the optional housing 590 depending on practical restraints of the respective head-wearable device being described. Additionally or alternatively, the optional housing 590 can include additional components to expand and/or augment the functionality of a head-wearable device.

In some embodiments, the computing system 520 and/or the optional housing 590 can include one or more peripheral interfaces 522A and 522B, one or more power systems 542A and 542B (including charger input 543, PMIC 544, and battery 545), one or more controllers 546A 546B (including one or more haptic controllers 547), one or more processors 548A and 548B (as defined above, including any of the examples provided), and memory 550A and 550B, which can all be in electronic communication with each other. For example, the one or more processors 548A and/or 548B can be configured to execute instructions stored in the memory 550A and/or 550B, which can cause a controller of the one or more controllers 546A and/or 546B to cause operations to be performed at one or more peripheral devices of the peripherals interfaces 522A and/or 522B. In some embodiments, each operation described can occur based on electrical power provided by the power system 542A and/or 542B.

In some embodiments, the peripherals interface 522A can include one or more devices configured to be part of the computing system 520, many of which have been defined above and/or described with respect to wrist-wearable devices shown in Figures 4A and 4B. For example, the peripherals interface can include one or more sensors 523A. Some example sensors include: one or more coupling sensors 524, one or more acoustic sensors 525, one or more imaging sensors 526, one or more EMG sensors 527, one or more capacitive sensors 528, and/or one or more IMUs 529. In some embodiments, the sensors 523A further include depth sensors 567, light sensors 568 and/or any other types of sensors defined above or described with respect to any other embodiments discussed herein.

In some embodiments, the peripherals interface can include one or more additional peripheral devices, including one or more NFC devices 530, one or more GPS devices 531, one or more LTE devices 532, one or more WiFi and/or Bluetooth devices 533, one or more buttons 534 (e.g., including buttons that are slidable or otherwise adjustable), one or more displays 535A, one or more speakers 536A, one or more microphones 537A, one or more cameras 538A (e.g., including the a first camera 539-1 through nth camera 539-n, which are analogous to the left camera 539A and/or the right camera 539B), one or more haptic devices 540; and/or any other types of peripheral devices defined above or described with respect to any other embodiments discussed herein.

The head-wearable devices can include a variety of types of visual feedback mechanisms (e.g., presentation devices). For example, display devices in the extended-reality device 500 and/or the VR device 510 can include one or more liquid-crystal displays (LCDs), light emitting diode (LED) displays, organic LED (OLED) displays, micro-LEDs, and/or any other suitable types of display screens. The head-wearable devices can include a single display screen (e.g., configured to be seen by both eyes), and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 535A can be coupled to each of the lenses 506-1 and 506-2 of the extended-reality device 500. The displays 535A coupled to each of the lenses 506-1 and 506-2 can act together or independently to present an image or series of images to a user. In some embodiments, the extended-reality device 500 and/or the VR device 510 includes a single display 535A (e.g., a near-eye display) or more than two displays 535A.

In some embodiments, a first set of one or more displays 535A can be used to present an augmented-reality environment, and a second set of one or more display devices 535A can be used to present a virtual-reality environment. In some embodiments, one or more waveguides are used in conjunction with presenting extended-reality content to the user of the extended-reality device 500 and/or the VR device 510 (e.g., as a means of delivering light from a display projector assembly and/or one or more displays 535A to the user's eyes). In some embodiments, one or more waveguides are fully or partially integrated into the extended-reality device 500 and/or the VR device 510. Additionally, or alternatively to display screens, some extended-reality systems include one or more projection systems. For example, display devices in the extended-reality device 500 and/or the VR device 510 can include micro-LED projectors that project light (e.g., using a waveguide) into display devices, such as clear combiner lenses that allow ambient light to pass through. The display devices can refract the projected light toward a user's pupil and can enable a user to simultaneously view both extended-reality content and the real world. The head-wearable devices can also be configured with any other suitable type or form of image projection system. In some embodiments, one or more waveguides are provided additionally or alternatively to the one or more display(s) 535A.

In some embodiments of the head-wearable devices, ambient light and/or a real-world live view (e.g., a live feed of the surrounding environment that a user would normally see) can be passed through a display element of a respective head-wearable device presenting aspects of the extended-reality system. In some embodiments, ambient light and/or the real-world live view can be passed through a portion less than all, of an extended-reality environment presented within a user's field of view (e.g., a portion of the extended-reality environment co-located with a physical object in the user's real-world environment that is within a designated boundary (e.g., a guardian boundary) configured to be used by the user while they are interacting with the extended-reality environment). For example, a visual user interface element (e.g., a notification user interface element) can be presented at the head-wearable devices, and an amount of ambient light and/or the real-world live view (e.g., 15-50% of the ambient light and/or the real-world live view) can be passed through the user interface element, such that the user can distinguish at least a portion of the physical environment over which the user interface element is being displayed.

The head-wearable devices can include one or more external displays 535A for presenting information to users. For example, an external display 535A can be used to show a current battery level, network activity (e.g., connected, disconnected, etc.), current activity (e.g., playing a game, in a call, in a meeting, watching a movie, etc.), and/or other relevant information. In some embodiments, the external displays 535A can be used to communicate with others. For example, a user of the head-wearable device can cause the external displays 535A to present a do not disturb notification. The external displays 535A can also be used by the user to share any information captured by the one or more components of the peripherals interface 522A and/or generated by head-wearable device (e.g., during operation and/or performance of one or more applications).

The memory 550A can include instructions and/or data executable by one or more processors 548A (and/or processors 548B of the housing 590) and/or a memory controller of the one or more controllers 546A (and/or controller 546B of the housing 590). The memory 550A can include one or more operating systems 551; one or more applications 552; one or more communication interface modules 553A; one or more graphics modules 554A; one or more extended-reality processing modules 555A; and/or any other types of modules or components defined above or described with respect to any other embodiments discussed herein.

The data 560 stored in memory 550A can be used in conjunction with one or more of the applications and/or programs discussed above. The data 560 can include profile data 561; sensor data 562; media content data 563; extended-reality application data 564; and/or any other types of data defined above or described with respect to any other embodiments discussed herein.

In some embodiments, the controller 546A of the head-wearable devices processes information generated by the sensors 523A on the head-wearable devices and/or another component of the head-wearable devices and/or communicatively coupled with the head-wearable devices (e.g., components of the housing 590, such as components of peripherals interface 522B). For example, the controller 546A can process information from the acoustic sensors 525 and/or image sensors 526. For each detected sound, the controller 546A can perform a direction of arrival (DOA) estimation to estimate a direction from which the detected sound arrived at a head-wearable device. As one or more of the acoustic sensors 525 detects sounds, the controller 546A can populate an audio data set with the information (e.g., represented by sensor data 562).

In some embodiments, a physical electronic connector can convey information between the head-wearable devices and another electronic device, and/or between one or more processors 548A of the head-wearable devices and the controller 546A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 600) is coupled to the head-wearable devices via one or more connectors. The connectors can be wired or wireless connectors and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the extended-reality device 500 and/or the VR device 510 can include one or more optical sensors such as two-dimensional (2D) or three-dimensional (3D) cameras, time-of-flight depth sensors, single-beam or sweeping laser rangefinders, 3D LiDAR sensors, and/or any other suitable type or form of optical sensor. A head-wearable device can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with in extended-reality environment), among a variety of other functions. For example, Figures 5B-1 and 5B-2 show the VR device 510 having cameras 539A-539D, which can be used to provide depth information for creating a voxel field and a two-dimensional mesh to provide object information to the user to avoid collisions.

The optional housing 590 can include analogous components to those describe above with respect to the computing system 520. For example, the optional housing 590 can include a respective peripherals interface 522B including more or less components to those described above with respect to the peripherals interface 522A. As described above, the components of the optional housing 590 can be used augment and/or expand on the functionality of the head-wearable devices. For example, the optional housing 590 can include respective sensors 523B, speakers 536B, displays 535B, microphones 537B, cameras 538B, and/or other components to capture and/or present data. Similarly, the optional housing 590 can include one or more processors 548B, controllers 546B, and/or memory 550B (including respective communication interface modules 553B; one or more graphics modules 554B; one or more extended-reality processing modules 555B, etc.) that can be used individually and/or in conjunction with the components of the computing system 520.

The techniques described above in Figures 5A-5C can be used with different head-wearable devices. In some embodiments, the head-wearable devices (e.g., the extended-reality device 500 and/or the VR device 510) can be used in conjunction with one or more wearable device such as a wrist-wearable device 400 (or components thereof). Having thus described example the head-wearable devices, attention will now be turned to example handheld intermediary processing devices, such as HIPD 600.

### Example Handheld Intermediary Processing Devices

Figures 6A and 6B illustrate an example handheld intermediary processing device (HIPD) 600, in accordance with some embodiments. The HIPD 600 is an instance of the intermediary device 214 described in reference to Figure 2 herein, such that the HIPD 600 should be understood to have the features described with respect to any intermediary device defined above or otherwise described herein, and vice versa. The HIPD 600 can perform various functions and/or operations associated with navigating through user interfaces and selectively opening applications.

Figure 6A shows a top view 605 and a side view 625 of the HIPD 600. The HIPD 600 is configured to communicatively couple with one or more wearable devices (or other electronic devices) associated with a user. For example, the HIPD 600 is configured to communicatively couple with a user's wrist-wearable device 400 (or components thereof, such as the watch body 420 and the wearable band 410), extended-reality device 500, and/or VR device 510. The HIPD 600 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, in some embodiments, the predetermined distance is the maximum distance (e.g., 10 meters) at which the HIPD 600 can successfully be communicatively coupled with an electronic device, such as a wearable device).

The HIPD 600 can perform various functions independently and/or in conjunction with one or more wearable devices (e.g., wrist-wearable device 400, extended-reality device 500, VR device 510, etc.). The HIPD 600 is configured to increase and/or improve the functionality of communicatively coupled devices, such as the wearable devices. The HIPD 600 is configured to perform one or more functions or operations associated with interacting with user interfaces and applications of communicatively coupled devices, interacting with an extended-reality environment, interacting with VR environment, and/or operating as a human-machine interface controller. Additionally, as will be described in more detail below, functionality and/or operations of the HIPD 600 can include, without limitation, task offloading and/or handoffs; thermals offloading and/or handoffs; 6 degrees of freedom (6DoF) raycasting and/or gaming (e.g., using imaging devices or cameras 614A and 614B, which can be used for simultaneous localization and mapping (SLAM) and/or with other image processing techniques); portable charging; messaging; image capturing via one or more imaging devices or cameras (e.g., cameras 622A and 622B); sensing user input (e.g., sensing a touch on a multi-touch input surface 602); wireless communications and/or interlining (e.g., cellular, near field, Wi-Fi, personal area network, etc.); location determination; financial transactions; providing haptic feedback; alarms; notifications; biometric authentication; health monitoring; sleep monitoring; etc. The above-example functions can be executed independently in the HIPD 600 and/or in communication between the HIPD 600 and another wearable device described herein. In some embodiments, functions can be executed on the HIPD 600 in conjunction with an extended-reality environment. As the skilled artisan will appreciate upon reading the descriptions provided herein, the novel the HIPD 600 described herein can be used with any type of suitable extended-reality environment.

While the HIPD 600 is communicatively coupled with a wearable device and/or other electronic device, the HIPD 600 is configured to perform one or more operations initiated at the wearable device and/or the other electronic device. In particular, one or more operations of the wearable device and/or the other electronic device can be offloaded to the HIPD 600 to be performed. The HIPD 600 performs the one or more operations of the wearable device and/or the other electronic device and provides to data corresponded to the completed operations to the wearable device and/or the other electronic device. For example, a user can initiate a video stream using extended-reality device 500 and back-end tasks associated with performing the video stream (e.g., video rendering) can be offloaded to the HIPD 600, which the HIPD 600 performs and provides corresponding data to the extended-reality device 500 to perform remaining front-end tasks associated with the video stream (e.g., presenting the rendered video data via a display of the extended-reality device 500). In this way, the HIPD 600, which has more computational resources and greater thermal headroom than a wearable device, can perform computationally intensive tasks for the wearable device improving performance of an operation performed by the wearable device.

The HIPD 600 includes a multi-touch input surface 602 on a first side (e.g., a front surface) that is configured to detect one or more user inputs. In particular, the multi-touch input surface 602 can detect single tap inputs, multi-tap inputs, swipe gestures and/or inputs, force-based and/or pressure-based touch inputs, held taps, and the like. The multi-touch input surface 602 is configured to detect capacitive touch inputs and/or force (and/or pressure) touch inputs. The multi-touch input surface 602 includes a first touch-input surface 604 defined by a surface depression, and a second touch-input surface 606 defined by a substantially planar portion. The first touch-input surface 604 can be disposed adjacent to the second touch-input surface 606. In some embodiments, the first touch-input surface 604 and the second touch-input surface 606 can be different dimensions, shapes, and/or cover different portions of the multi-touch input surface 602. For example, the first touch-input surface 604 can be substantially circular and the second touch-input surface 606 is substantially rectangular. In some embodiments, the surface depression of the multi-touch input surface 602 is configured to guide user handling of the HIPD 600. In particular, the surface depression is configured such that the user holds the HIPD 600 upright when held in a single hand (e.g., such that the using imaging devices or cameras 614A and 614B are pointed toward a ceiling or the sky). Additionally, the surface depression is configured such that the user's thumb rests within the first touch-input surface 604.

In some embodiments, the different touch-input surfaces include a plurality of touch-input zones. For example, the second touch-input surface 606 includes at least a first touch-input zone 608 within a second touch-input zone 606 and a third touch-input zone 610 within the first touch-input zone 608. In some embodiments, one or more of the touch-input zones are optional and/or user defined (e.g., a user can specific a touch-input zone based on their preferences). In some embodiments, each touch-input surface and/or touch-input zone is associated with a predetermined set of commands. For example, a user input detected within the first touch-input zone 608 causes the HIPD 600 to perform a first command and a user input detected within the second touch-input zone 606 causes the HIPD 600 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 608 can be configured to detect force touch inputs (e.g., a magnitude at which the user presses down) and capacitive touch inputs, and the second touch-input zone 606 can be configured to detect capacitive touch inputs.

The HIPD 600 includes one or more sensors 651 for sensing data used in the performance of one or more operations and/or functions. For example, the HIPD 600 can include an IMU that is used in conjunction with cameras 614 for 3-dimensional object manipulation (e.g., enlarging, moving, destroying, etc. an object) in an extended-reality or VR environment. Non-limiting examples of the sensors 651 included in the HIPD 600 include a light sensor, a magnetometer, a depth sensor, a pressure sensor, and a force sensor. Additional examples of the sensors 651 are provided below in reference to Figure 6B.

The HIPD 600 can include one or more light indicators 612 to provide one or more notifications to the user. In some embodiments, the light indicators are LEDs or other types of illumination devices. The light indicators 612 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 604. The light indicators can be illuminated in different colors and/or patterns to provide the user with one or more notifications and/or information about the device. For example, a light indicator positioned around the first touch-input surface 604 can flash when the user receives a notification (e.g., a message), change red when the HIPD 600 is out of power, operate as a progress bar (e.g., a light ring that is closed when a task is completed (e.g., 0% to 100%)), operates as a volume indicator, etc.).

In some embodiments, the HIPD 600 includes one or more additional sensors on another surface. For example, as shown Figure 6A, HIPD 600 includes a set of one or more sensors (e.g., sensor set 620) on an edge of the HIPD 600. The sensor set 620, when positioned on an edge of the of the HIPD 600, can be pe positioned at a predetermined tilt angle (e.g., 26 degrees), which allows the sensor set 620 to be angled toward the user when placed on a desk or other flat surface. Alternatively, in some embodiments, the sensor set 620 is positioned on a surface opposite the multi-touch input surface 602 (e.g., a back surface). The one or more sensors of the sensor set 620 are discussed in detail below.

The side view 625 of the of the HIPD 600 shows the sensor set 620 and camera 614B. The sensor set 620 includes one or more cameras 622A and 622B, a depth projector 624, an ambient light sensor 628, and a depth receiver 630. In some embodiments, the sensor set 620 includes a light indicator 626. The light indicator 626 can operate as a privacy indicator to let the user and/or those around them know that a camera and/or microphone is active. The sensor set 620 is configured to capture a user's facial expression such that the user can puppet a custom avatar (e.g., showing emotions, such as smiles, laughter, etc., on the avatar or a digital representation of the user). The sensor set 620 can be configured as a side stereo RGB system, a rear indirect Time-of-Flight (iToF) system, or a rear stereo RGB system. As the skilled artisan will appreciate upon reading the descriptions provided herein, the novel HIPD 600 described herein can use different sensor set 620 configurations and/or sensor set 620 placement.

In some embodiments, the HIPD 600 includes one or more haptic devices 671 (Figure 6B; e.g., a vibratory haptic actuator) that are configured to provide haptic feedback (e.g., kinesthetic sensation). The sensors 651, and/or the haptic devices 671 can be configured to operate in conjunction with multiple applications and/or communicatively coupled devices including, without limitation, a wearable devices, health monitoring applications, social media applications, game applications, and extended reality applications (e.g., the applications associated with extended reality).

The HIPD 600 is configured to operate without a display. However, in optional embodiments, the HIPD 600 can include a display 668 (Figure 6B). The HIPD 600 can also income one or more optional peripheral buttons 667 (Figure 6B). For example, the peripheral buttons 667 can be used to turn on or turn off the HIPD 600. Further, the HIPD 600 housing can be formed of polymers and/or elastomer elastomers. The HIPD 600 can be configured to have a non-slip surface to allow the HIPD 600 to be placed on a surface without requiring a user to watch over the HIPD 600. In other words, the HIPD 600 is designed such that it would not easily slide off a surfaces. In some embodiments, the HIPD 600 include one or magnets to couple the HIPD 600 to another surface. This allows the user to mount the HIPD 600 to different surfaces and provide the user with greater flexibility in use of the HIPD 600.

As described above, the HIPD 600 can distribute and/or provide instructions for performing the one or more tasks at the HIPD 600 and/or a communicatively coupled device. For example, the HIPD 600 can identify one or more back-end tasks to be performed by the HIPD 600 and one or more front-end tasks to be performed by a communicatively coupled device. While the HIPD 600 is configured to offload and/or handoff tasks of a communicatively coupled device, the HIPD 600 can perform both back-end and front-end tasks (e.g., via one or more processors, such as CPU 677; Figure 6B). The HIPD 600 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 600 can perform the above operations alone or in conjunction with a wearable device (or other communicatively coupled electronic device).

Figure 6B shows block diagrams of a computing system 640 of the HIPD 600, in accordance with some embodiments. The HIPD 600, described in detail above, can include one or more components shown in HIPD computing system 640. The HIPD 600 will be understood to include the components shown and described below for the HIPD computing system 640. In some embodiments, all, or a substantial portion of the components of the HIPD computing system 640 are included in a single integrated circuit. Alternatively, in some embodiments, components of the HIPD computing system 640 are included in a plurality of integrated circuits that are communicatively coupled.

The HIPD computing system 640 can include a processor (e.g., a CPU 677, a GPU, and/or a CPU with integrated graphics), a controller 675, a peripherals interface 650 that includes one or more sensors 651 and other peripheral devices, a power source (e.g., a power system 695), and memory (e.g., a memory 678) that includes an operating system (e.g., an operating system 679), data (e.g., data 688), one or more applications (e.g., applications 680), and one or more modules (e.g., a communications interface module 681, a graphics module 682, a task and processing management module 683, an interoperability module 684, an extended-reality processing module 685, a data management module 686, etc.). The HIPD computing system 640 further includes a power system 695 that includes a charger input and output 696, a PMIC 697, and a battery 698, all of which are defined above.

In some embodiments, the peripherals interface 650 can include one or more sensors 651. The sensors 651 can include analogous sensors to those described above in reference to Figures 4B. For example, the sensors 651 can include imaging sensors 654, (optional) EMG sensors 656, IMUs 658, and capacitive sensors 660. In some embodiments, the sensors 651 can include one or more pressure sensor 652 for sensing pressure data, an altimeter 653 for sensing an altitude of the HIPD 600, a magnetometer 655 for sensing a magnetic field, a depth sensor 657 (or a time-of flight sensor) for determining a difference between the camera and the subject of an image, a position sensor 659 (e.g., a flexible position sensor) for sensing a relative displacement or position change of a portion of the HIPD 600, a force sensor 661 for sensing a force applied to a portion of the HIPD 600, and a light sensor 662 (e.g., an ambient light sensor) for detecting an amount of lighting. The sensors 651 can include one or more sensors not shown in Figure 6B.

Analogous to the peripherals described above in reference to Figures 4B, the peripherals interface 650 can also include an NFC component 663, a GPS component 664, an LTE component 665, a Wi-Fi and/or Bluetooth communication component 666, a speaker 669, a haptic device 671, and a microphone 673. As described above in reference to Figure 6A, the HIPD 600 can optionally include a display 668 and/or one or more buttons 667. The peripherals interface 650 can further include one or more cameras 670, touch surfaces 672, and/or one or more light emitters 674. The multi-touch input surface 602 described above in reference to Figure 6A is an example of touch surface 672. The light emitters 674 can be one or more LEDs, lasers, etc. and can be used to project or present information to a user. For example, the light emitters 674 can include light indicators 612 and 626 described above in reference to Figure 6A. The cameras 670 (e.g., cameras 614A, 614B, and 622 described above in Figure 6A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 670 can be used for SLAM; 6 DoF ray casting, gaming, object manipulation, and/or other rendering; facial recognition and facial expression recognition, etc.

Similar to the watch body computing system 460 and the watch band computing system 430 described above in reference to Figure 4B, the HIPD computing system 640 can include one or more haptic controllers 676 and associated componentry (e.g., haptic devices 671) for providing haptic events at the HIPD 600.

Memory 678 can include high-speed random-access memory and/or non-volatile memory, such as one or more magnetic disk storage devices, flash memory devices, or other non-volatile solid-state memory devices. Access to the memory 678 by other components of the HIPD 600, such as the one or more processors and the peripherals interface 650, can be controlled by a memory controller of the controllers 675.

In some embodiments, software components stored in the memory 678 include one or more operating systems 679, one or more applications 680, one or more communication interface modules 681, one or more graphics modules 682, one or more data management modules 685, which are analogous to the software components described above in reference to Figure 4B.

In some embodiments, software components stored in the memory 678 include a task and processing management module 683 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 683 uses data 688 (e.g., device data 690) to distribute the one or more front-end and/or back-end tasks based on communicatively coupled devices' computing resources, available power, thermal headroom, ongoing operations, and/or other factors. For example, the task and processing management module 683 can cause the performance of one or more back-end tasks (of an operation performed at communicatively coupled extended-reality device 500) at the HIPD 600 in accordance with a determination that the operation is utilizing a predetermined amount (e.g., at least 70%) of computing resources available at the extended-reality device 500.

In some embodiments, software components stored in the memory 678 include an interoperability module 684 for exchanging and utilizing information received and/or provided to distinct communicatively coupled devices. The interoperability module 684 allows for different systems, devices, and/or applications to connect and communicate in a coordinated way without user input. In some embodiments, software components stored in the memory 678 include an extended-reality module 685 that is configured to process signals based at least on sensor data for use in an extended-reality and/or VR environment. For example, the extended-reality processing module 685 can be used for 3D object manipulation, gesture recognition, facial and facial expression, recognition, etc.

The memory 678 can also include data 687, including structured data. In some embodiments, the data 687 can include profile data 689, device data 689 (including device data of one or more devices communicatively coupled with the HIPD 600, such as device type, hardware, software, configurations, etc.), sensor data 691, media content data 692, and application data 693.

It should be appreciated that the HIPD computing system 640 is an example of a computing system within the HIPD 600, and that the HIPD 600 can have more or fewer components than shown in the HIPD computing system 640, combine two or more components, and/or have a different configuration and/or arrangement of the components. The various components shown in HIPD computing system 640 are implemented in hardware, software, firmware, or a combination thereof, including one or more signal processing and/or application-specific integrated circuits.

The techniques described above in Figure 6A-6B can be used with any device used as a human-machine interface controller. In some embodiments, an HIPD 600 can be used in conjunction with one or more wearable device such as a head-wearable device (e.g., extended-reality device 500 and VR device 510) and/or a wrist-wearable device 400 (or components thereof).

Figure 7 illustrates a pair of glasses (e.g., an augmented-reality glasses or a pair of smart glasses) that have a user-removable batteries located in at least cavities 701A and 701B (occluded) of the temple arms 703A and 703B and the user-removable temple arm batteries can be charged in a location in a portable charging case, in accordance with some embodiments. Figure 7 shows a pair of glasses 700 that include user-removable temple arm batteries 702A and 702B. These user-removable temple arm batteries 702A and 702B can be accessed via removable doors 704A and 704B, respectively. In some embodiments, additional batteries can be included that are not user removable, such that removing the user-removable temple arm batteries 702A and 702B does not cause the glasses 700 to power down immediately upon removal.

Figure 7 also shows a charging case 706 that includes a provision 707 for inserting the user-removable temple arm batteries 702A and 702B for charging by the charging case 706. The charging case can store an extra set of user-removable temple arm batteries 708A and 708B, such that the wearer can swap the depleted user-removable temple arm batteries 702A and 702B with the fully charged user-removable temple arm batteries 708A and 708B while on the go. In some embodiments, the charging case includes an additional (optionally integrated) battery that is configured to charge the user-removable batteries while on the go. For example, a user can place depleted user-removable batteries into the case 706 and the depleted user-removable batteries will charge to a useable level (e.g., fully or some value less than that) before the batteries in the glasses are depleted. Thereby allowing the user to continuously use the pair of glasses until the case 706 can no longer supply enough power to charge the user-removable batteries.

In some embodiments, more than two batteries (e.g., four, six, eight, etc.) can be charged/stowed within the charging case 706, and this number can depend on how many batteries cycles are needed to provide a full day of use. In some embodiments, more batteries is preferential, as transferring power from a battery of the charging case to the additional batteries that can be placed in the temple arm is less energy efficient. In some embodiments, the case is entirely powered by the user-removable batteries and no additional battery is included in the case 706.

In some embodiments, the provision 707 for charging the batteries can be located on the outside of the charging case 706, inside the charging case 706, or a combination thereof.

In some embodiments, the provision 707 includes a door 709 for sealing off the batteries from the environment. In some embodiments, the door 709 is fully removable, and in other embodiments the door is coupled via a hinge. In some embodiments, the batteries are inserted into the case without the need for a door (e.g., the batteries slide into spring loaded recesses and latches into/releases when pushed beyond a threshold. In some embodiments, the batteries are maintained in their position without the use of a door. In some embodiments, the provision can include non-battery components, for example, an additional processor for when the user wants to use a more processing demanding function.

In some embodiments, the case 706 includes a battery status indicator (e.g., LED(s) 710A and 710B) that notifies the wearer of the charge status of the user-removable temple arm batteries located in the charging case 706. In some embodiments, the glasses 700 can include an augmented-reality augment the visualizes the charge status of the batteries (e.g., a red or green outline around the battery indicating the battery charged below or beyond a certain point, or a illustration indicating the charge level of each battery.

In some embodiments, the charging case is configured to indirectly charge the user-removable temple arm batteries when they are coupled to the pair of glasses 700 and the pair of glasses are placed in a receptacle within the charging case 706. In addition the charging case 706 can include additional provisions to charge additional accessories that are used in conjunction with the pair of glasses 700 (e.g., an HIPD, a wrist-wearable device, headphones, etc.). In some embodiments, the batteries used in the temple arms can also be used in some of the additional accessories, such as the HIPD.

In some embodiments, the charging case includes a charging port for charging all coupled batteries and electronic devices. In some embodiments, the portable charging case may also act as a intermediary processing device configured to aid in the presentation of an extended reality at the pair of glasses.

In some embodiments, the charging case can biderctionally charge devices from the removable temple arm batteries placed within the charging case based on a logic determination. For example, if an internal battery of the charging case is depleted and the additional temple arm batteries are not depleted, then the charging case may charge the pair of glasses from the energy stored in the additional temple arms batteries. While this is just one example, the same technique can be applied in different ways based on charge levels of other devices located in the charging case. In some embodiments, pattern recognition can also be used to determine the optimal device to charge when all devices cannot be fully charged (e.g., user wears glasses but does not use the controller after 5:00 PM on weekdays, thus the charging case will prioritize the glasses charge level over the controller charge level).

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt-in or opt-out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings as defined in the appended claims. The embodiments were chosen and described in order to best explain principles of operation and practical applications, to thereby enable others skilled in the art.

## Claims

1. A portable smart glasses charging case, comprising:
a glasses-holding section configured to (i) hold a pair of smart glasses and (ii) deliver a charge to the pair of smart glasses;
a foldable section having:
a folded state in which the foldable section is configured to cover the glasses-holding section while the pair of smart glasses continues to receive the charge;
an unfolded state in which the foldable section lays substantially flat to reveal (i) a first section for delivering a charge to a first electronic device that is distinct from the pair of smart glasses and (ii) a second section for delivering a charge to a second electronic device that is distinct from the pair of smart glasses and the first electronic device, wherein the pair of smart glasses continues to receive the charge while the first and second sections are delivering charges to the first and second electronic devices, respectively.

2. The portable smart glasses charging case of claim 1, wherein the first electronic device is a wrist-wearable device.

3. The portable smart glasses charging case of claim 1 or claim 2, wherein the second electronic device is an intermediary process device.

4. The portable smart glasses charging case of any preceding claim, wherein the folded state has a triangular shape.

5. The portable smart glasses charging case of any preceding claim, wherein the folded state is not configured to charge the first electronic device and the second electronic device.

6. The portable smart glasses charging case of any preceding claim, wherein the first section is configured to overlap and couple with the second section in the folded state to cover the glasses holding section.

7. The portable smart glasses charging case of any preceding claim, wherein the portable smart glasses charging case comprises a power supply configured to concurrently provide power to (i) the pair of smart glasses, (ii) the first electronic device, and (iii) the second electronic device;
optionally, the pair of smart glasses are configured to be charged using a first charging protocol, and at least one of the first or second electronic device are configured to be charged via a second charging protocol;
optionally, wherein the portable smart glasses charging case is configured to receive power from a power supply via a single power receiver.
optionally, wherein the power supply is configured to store enough power to fully charge the pair of smart glasses, the first electronic device, and the second electronic device from an empty state of charge.

8. The portable smart glasses charging case of any preceding claim, wherein the foldable section comprises one or more magnets for maintaining the folded state;
optionally, wherein one of the one or more magnets is configured to secure at least one of: the pair of smart glasses, the first electronic device or the second electronic device.

9. The portable smart glasses charging case of any preceding claim, wherein the pair of smart glasses are secured in the portable smart glasses charging case via a retention bracket located at a nose bridge of the smart glasses;
optionally, wherein the retention bracket comprises a pair of pins for supplying a charge to the pair of smart glasses.

10. The portable smart glasses charging case of any preceding claim, wherein at least one of the first electronic device and the second electronic device are configured to be charged via a wireless charging protocol.

11. The portable smart glasses charging case of any preceding claim, wherein the pair of smart glasses are extended-reality glasses.

12. A wireless charging system, comprising:
a pair of smart glasses;
an electronic device different from the pair of smart glasses, and
a portable smart glasses charging case configured to charge at least the pair of smart glasses and the electronic device, wherein the portable smart glasses charging case comprises:
a glasses-holding section configured to (i) hold the pair of smart glasses and (ii) deliver a charge to the pair of smart glasses;
a foldable section having:
a folded state in which the foldable section is configured to cover the glasses-holding section while the pair of smart glasses continues to receive the charge;
an unfolded state in which the foldable section lays substantially flat to reveal (i) a first section for delivering a charge to the electronic device that is distinct from the pair of smart glasses and (ii) a second section for delivering a charge to another electronic device that is distinct from the pair of smart glasses and the electronic device, wherein the pair of smart glasses continues to receive the charge while the first and second sections are delivering charges to the electronic device and the other electronic device, respectively.

13. The wireless charging system of claim 12, wherein the electronic device is a wrist-wearable device.

14. The wireless charging system of claim 12 or claim 13, and one or more of the following:
(i) wherein the wireless charging system comprises the other electronic device and the other electronic device is an intermediary process device;
(ii) wherein the folded state has a triangular shape.

15. A charging case for dual-position charging of an extended-reality glasses device and single-position charging of accessory devices, comprising:
an upright charging stand comprising an internal power source, an external power source connector, and one or more electrical contacts, wherein an extended-reality glasses device is configured to mechanically couple with the upright charging stand and electrically couple with the one or more electrical contacts such that the upright charging stand provides power from the internal power source and/or an external power source via the extemal power source connector to charge the extended-reality glasses device when the charging case is in an open position and/or when the charging case is in a closed position;
a first wireless charging pad configured to wirelessly charge, using the internal power source or the external power source via the external power source connector, a first extended-reality accessory device distinct from the extended-reality glasses device when the charging case is in the open position and when the charging case is in the closed position the first wireless charging pad is disabled, wherein:
the first wireless charging pad is connected with the upright charging stand via a first flexible section,
the first wireless charging pad faces the upright charging stand when in the charging case is in the closed position, and
the first wireless charging pad folds out relative to the upright charging stand when the charging case transitions from the closed position to the open position; and
a second wireless charging pad configured to wirelessly charge, using the internal power source or the external power source via the external power source connector, a second extended-reality accessory device distinct from the extended-reality glasses device when the charging case is in the open position and when the charging case is in the closed position the second wireless charging pad is disabled, wherein:
the second wireless charging pad is connected with the upright charging stand via a second flexible section,
the second wireless charging pad faces the upright charging stand when the charging case is in the closed position, and
the second wireless charging pad folds out relative to the upright charging stand when the charging case transitions from the closed position to the open position.
